# EUROPEAN PATENT APPLICATION

(11) **EP 4 333 495 A1**
(43) Date of publication of application: **06.03.2024**
(21) Application number: 22803612.5
(22) Date of filing: 16.03.2022
(51) Int. Cl.: H04W 28/08

(54) **METHOD FOR DETERMINING UPLINK CARRIER, AND COMMUNICATION APPARATUS**

(30) Priority: 17.05.2021 CN 202110534705
(71) Applicant: Huawei Technologies Co., Ltd., Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LIU, Jianghua, Shenzhen, Guangdong 518129 (CN)
(74) Representative: Goddar, Heinz J.
(86) International application number: PCT/CN2022/081173
(87) International publication number: WO 2022/242283

(57) **Abstract**

This application provides a method for determining an uplink carrier and a communication apparatus. The method includes: receiving a first parameter of at least one first uplink carrier from a network device, where the first parameter is associated with at least one of the following of the at least one first uplink carrier: load and a subcarrier spacing SCS; and determining a second uplink carrier from the at least one first uplink carrier based on the first parameter of the at least one first uplink carrier, where the second uplink carrier is an uplink carrier for access. According to the solution provided in this application, a terminal device can determine the second uplink carrier from the at least one first uplink carrier based on the received first parameter of the at least one first uplink carrier. Because the terminal device determines, based on the first parameter of the at least one first uplink carrier, the second uplink carrier for access, the terminal device can access a matched uplink carrier to balance load, thereby improving system performance.

## Description

This application claims priority to Chinese Patent Application No. 202110534705.1, filed with the China National Intellectual Property Administration on May 17, 2021 and entitled "METHOD FOR DETERMINING UPLINK CARRIER AND COMMUNICATION APPARATUS", which is incorporated herein by reference in its entirety.

### TECHNICAL FIELD

This application relates to the communication field, and in particular, to a method for determining an uplink carrier and a communication apparatus.

### BACKGROUND

Currently, carrier aggregation (carrier aggregation, CA) is a key technology. In CA, a cell (cell) may include a primary cell (primary cell, PCell) and a secondary cell (secondary cell, SCell). The primary cell and the secondary cell each include one uplink component carrier (uplink component carrier, UL CC) and one downlink component carrier (downlink component carrier, DL CC). In a flexible access technology, a cell may include one downlink carrier and a plurality of uplink carriers without being limited by a CA requirement. A terminal device may flexibly select an uplink carrier in the cell according to a service requirement.

Currently, in an implementation, the terminal device may access a corresponding uplink carrier based on a camped downlink carrier. In another implementation, the terminal device may compare with a threshold based on the camped downlink carrier during access. If a signal strength corresponding to an uplink carrier is less than the threshold, the terminal device performs access from a supplementary uplink (supplementary uplink, SLTL). If a signal strength corresponding to an uplink carrier is greater than the threshold, the terminal device performs access from a normal uplink (normal uplink, NUL).

In other words, when camping on a cell through a downlink carrier, the terminal device may access a corresponding uplink carrier. However, when the downlink carrier has only one low-frequency carrier for measurement as a camped downlink carrier, and the uplink carrier is in a high frequency band, or the uplink carrier and the downlink carrier are distributed at different site addresses, the uplink carrier cannot be directly selected based on measurement of the camped downlink carrier. In addition, how to select an uplink access carrier from a plurality of uplink carriers and consider load of the plurality of uplink carriers to avoid load imbalance on the uplink carriers is not resolved in a current technology.

### SUMMARY

This application provides a method for determining an uplink carrier and a communication apparatus, so that a terminal device can access a matched uplink carrier to balance load.

According to a first aspect, a method for determining an uplink carrier is provided. The method includes: receiving a first parameter of at least one first uplink carrier from a network device, where the first parameter is associated with at least one of the following items of the at least one first uplink carrier: load and a subcarrier spacing SCS; and determining a second uplink carrier from the at least one first uplink carrier based on the first parameter of the at least one first uplink carrier, where the second uplink carrier is an uplink carrier for access.

In this embodiment of this application, that the second uplink carrier is an uplink carrier for access may be understood as that a terminal device performs random access on the second uplink carrier.

According to the solution provided in this application, a terminal device can determine the second uplink carrier from the at least one first uplink carrier based on the received first parameter of the at least one first uplink carrier. Because the terminal device determines the second uplink carrier for access based on the first parameter of the at least one first uplink carrier, the terminal device can access a matched uplink carrier to balance load, thereby improving system performance.

With reference to the first aspect, in some possible implementations, the second uplink carrier is an uplink carrier with a largest first parameter in the at least one first uplink carrier; or the second uplink carrier is an uplink carrier with a smallest first parameter in the at least one first uplink carrier.

According to the solution provided in this application, the second uplink carrier determined by the terminal device may be the uplink carrier with the largest or smallest first parameter in the at least one first uplink carrier. The first parameter is associated with at least one of the following items of the at least one first uplink carrier: the load and the SCS, so that the terminal device accesses the matched uplink carrier based on the first parameter, thereby reducing an access latency and balancing load, and improving system performance.

With reference to the first aspect, in some possible implementations, the method further includes: determining a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

According to the solution provided in this application, the second uplink carrier determined by the terminal device may be the uplink carrier with the largest or smallest sequence number in the at least one third uplink carrier, and the third uplink carrier is an uplink carrier whose first parameter is greater than the first value in the at least one first uplink carrier, or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

With reference to the first aspect, in some possible implementations, the method further includes: determining a first value, where the second uplink carrier is an uplink carrier with a highest signal strength in at least one third uplink carrier; or the second uplink carrier is an uplink carrier, in at least one third uplink carrier, with a highest signal strength of a downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

According to the solution provided in this application, the second uplink carrier determined by the terminal device may be the uplink carrier with the highest signal strength in the at least one third uplink carrier, or the second uplink carrier may be the uplink carrier, in the at least one third uplink carrier, with the highest signal strength of the downlink carrier associated with the at least one third uplink carrier. The third uplink carrier is an uplink carrier whose first parameter is greater than or equal to the first value in the at least one first uplink carrier; or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

With reference to the first aspect, in some possible implementations, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

According to the solution provided in this application, the first value may be any value from 0 to the third threshold, and the third threshold is associated with at least one of the following: the QoS level, the BSR level, the type of the terminal device, the latency requirement, and the service type of the terminal device. In other words, the third threshold may vary with at least one of the foregoing items. Therefore, the first value may change with the third threshold, and the at least one third uplink carrier that meets the condition may be adjusted, thereby improving flexibility of selecting the second uplink carrier by the terminal device.

With reference to the first aspect, in some possible implementations, the third threshold is configured by the network device by using radio resource control RRC signaling; or the third threshold is predefined.

With reference to the first aspect, in some possible implementations, the at least one first uplink carrier is an uplink carrier whose signal strength is greater than or equal to a first threshold in at least one uplink carrier configured by the network device; or the at least one first uplink carrier is an uplink carrier, in at least one uplink carrier configured by the network device, with a signal strength of a downlink carrier associated with the at least one uplink carrier being greater than or equal to a second threshold.

According to the solution provided in this application, the at least one first uplink carrier is an uplink carrier whose signal strength is greater than or equal to the first threshold in the at least one uplink carrier configured by the network device, or an uplink carrier, in the at least one uplink carrier configured by the network device, with a signal strength of a downlink carrier associated with the at least one uplink carrier being greater than or equal to the second threshold. Because the at least one first uplink carrier is selected by the network device from a plurality of uplink carriers, a selection range is narrowed for determining the second uplink carrier for the terminal device. Further, an access latency can be reduced, thereby improving system performance.

With reference to the first aspect, in some possible implementations, a larger value of at least one of the following items indicates a smaller first parameter: the load and the SCS; or a larger value of at least one of the following items indicates a larger first parameter: the load and the SCS.

With reference to the first aspect, in some possible implementations, a quantity of the at least one first uplink carrier is a positive integer greater than 1.

According to a second aspect, an uplink carrier access method is provided. The method includes: A network device determines a first parameter, where the first parameter is associated with at least one of the following items of at least one first uplink carrier: load and a subcarrier spacing SCS; and sending, by the network device, the first parameter to a terminal device.

According to the solution provided in this application, the network device can send the first parameter of the at least one first uplink carrier to the terminal device, so that the terminal device determines the second uplink carrier from the at least one first uplink carrier, and the terminal device can access a matched uplink carrier to balance load, thereby improving system performance.

With reference to the second aspect, in some possible implementations, a larger value of at least one of the following items indicates a smaller first parameter: the load and the SCS; or a larger value of at least one of the following items indicates a larger first parameter: the load and the SCS.

With reference to the second aspect, in some possible implementations, a quantity of the at least one first uplink carrier is a positive integer greater than 1.

According to a third aspect, an uplink carrier access method is provided. The method includes: A terminal device receives first information, where the first information includes correspondence information between at least one first uplink carrier and at least one second downlink carrier; and the terminal device determines a second uplink carrier from the at least one first uplink carrier based on the first information, where the second uplink carrier is an uplink carrier for access in a first cell. The at least one first uplink carrier and a second downlink carrier are located in a second cell, and the at least one first uplink carrier is located in the first cell; or the at least one first uplink carrier and a first downlink carrier are located in the first cell.

According to the solution provided in this application, the terminal device can determine the second uplink carrier from the at least one first uplink carrier based on the received correspondence information between the at least one first uplink carrier and the at least one second downlink carrier. Because the terminal device determines the second uplink carrier for access based on the correspondence information between the at least one first uplink carrier and the at least one second downlink carrier, the terminal device can access the matched uplink carrier, thereby ensuring coverage performance and improving a system throughput.

With reference to the third aspect, in some possible implementations, the method further includes: The terminal device determines a signal strength of the at least one second downlink carrier, where the second uplink carrier is an uplink carrier corresponding to a downlink carrier with a highest signal strength in the at least one second downlink carrier.

According to the solution provided in this application, the second uplink carrier determined by the terminal device may be the uplink carrier corresponding to the downlink carrier with the highest signal strength in the at least one second downlink carrier. A higher signal strength indicates a better coverage degree. Therefore, the terminal device accesses the matched uplink carrier based on the signal strength, thereby increasing an access probability and reducing an access latency, and improving system performance.

With reference to the third aspect, in some possible implementations, the method further includes: The terminal device receives a first parameter of the at least one first uplink carrier, where the first parameter is associated with at least one of the following items of the at least one first uplink carrier: load and a subcarrier spacing SCS; and determines a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first threshold in the at least one first uplink carrier; or the at least one third uplink carrier is an uplink carrier whose first parameter is less than the first value in the at least one first uplink carrier.

According to the solution provided in this application, the second uplink carrier determined by the terminal device may be the uplink carrier with the largest or smallest sequence number in the at least one third uplink carrier, and the third uplink carrier is an uplink carrier whose first parameter is greater than the first value in the at least one first uplink carrier, or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

With reference to the third aspect, in some possible implementations, the method further includes: The terminal device receives a first parameter of the at least one first uplink carrier, where the first parameter is associated with at least one of the following items of the at least one first uplink carrier: load and a subcarrier spacing SCS; and determines a first value, where the second uplink carrier is an uplink carrier, in at least one third uplink carrier, with a highest signal strength of the at least one second downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

According to the solution provided in this application, the second uplink carrier determined by the terminal device may be the uplink carrier with the highest signal strength in the at least one third uplink carrier, or the second uplink carrier may be the uplink carrier, in the at least one third uplink carrier, with the highest signal strength of the downlink carrier associated with the at least one third uplink carrier. The third uplink carrier is an uplink carrier whose first parameter is greater than or equal to the first value in the at least one first uplink carrier; or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

With reference to the third aspect, in some possible implementations, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

According to the solution provided in this application, the first value may be any value from 0 to the third threshold, and the third threshold is associated with at least one of the following: the QoS level, the BSR level, the type of the terminal device, the latency requirement, and the service type of the terminal device. In other words, the third threshold may vary with at least one of the foregoing items. Therefore, the first value may change with the third threshold, and the at least one third uplink carrier that meets the condition may be adjusted, thereby improving flexibility of selecting the second uplink carrier by the terminal device.

With reference to the third aspect, in some possible implementations, the third threshold is configured by the network device by using radio resource control RRC signaling; or the third threshold is predefined.

With reference to the third aspect, in some possible implementations, a larger value of at least one of the following items indicates a smaller first parameter: the load and the SCS; or a larger value of at least one of the following items indicates a larger first parameter: the load and the SCS.

With reference to the third aspect, in some possible implementations, a quantity of the at least one first uplink carrier is a positive integer greater than 1.

According to a fourth aspect, an uplink carrier access method is provided. The method includes: A network device determines first information, where the first information includes correspondence information between at least one first uplink carrier and at least one second downlink carrier; and the network device sends the first information to a terminal device.

According to the solution provided in this application, the network device can send the correspondence information between the at least one first uplink carrier and the at least one second downlink carrier to the terminal device, so that the terminal device determines the second uplink carrier from the at least one first uplink carrier, and the terminal device accesses the matched uplink carrier, to ensure coverage performance, thereby improving a system throughput.

With reference to the fourth aspect, in some possible implementations, the method further includes: The network device sends a first parameter of at least one first uplink carrier to the terminal device, where the first parameter is associated with at least one of the following items of the at least one first uplink carrier: load and a subcarrier spacing SCS.

With reference to the fourth aspect, in some possible implementations, a larger value of at least one of the following items indicates a smaller first parameter: the load and the SCS; or a larger value of at least one of the following items indicates a larger first parameter: the load and the SCS.

With reference to the fourth aspect, in some possible implementations, a quantity of the at least one first uplink carrier is a positive integer greater than 1.

According to a fifth aspect, a measurement method is provided. The method includes: A terminal device receives system information, where the system information includes configuration information for measuring a reference signal of a carrier for another terminal device; and the terminal device measures the reference signal based on the system information.

In this application, when a carrier measured by the terminal device is the same as a carrier measured in configuration information of another terminal device, the terminal device may measure a reference signal of the terminal device based on the configuration information for measuring a reference signal of a carrier for another terminal device, so that resources can be saved.

According to a sixth aspect, a communication apparatus is provided, where the apparatus includes: a communication module, configured to receive a first parameter of at least one first uplink carrier from a network device, where the first parameter is associated with at least one of the following items of the at least one first uplink carrier: load and a subcarrier spacing SCS; and a processing module, configured to determine a second uplink carrier from the at least one first uplink carrier based on the first parameter of the at least one first uplink carrier, where the second uplink carrier is an uplink carrier for access.

With reference to the sixth aspect, in some possible implementations, the second uplink carrier is an uplink carrier with a largest first parameter in the at least one first uplink carrier; or the second uplink carrier is an uplink carrier with a smallest first parameter in the at least one first uplink carrier.

With reference to the sixth aspect, in some possible implementations, the processing module is further configured to determine a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

With reference to the sixth aspect, in some possible implementations, the processing module is further configured to determine a first value, where the second uplink carrier is an uplink carrier with a highest signal strength in at least one third uplink carrier; or the second uplink carrier is an uplink carrier, in at least one third uplink carrier, with a highest signal strength of a downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

With reference to the sixth aspect, in some possible implementations, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

With reference to the sixth aspect, in some possible implementations, the third threshold is configured by the network device by using radio resource control RRC signaling; or the third threshold is predefined.

With reference to the sixth aspect, in some possible implementations, the at least one first uplink carrier is an uplink carrier whose signal strength is greater than or equal to a first threshold in at least one uplink carrier configured by the network device; or the at least one first uplink carrier is an uplink carrier, in at least one uplink carrier configured by the network device, with a signal strength of a downlink carrier associated with the at least one uplink carrier being greater than or equal to a second threshold.

With reference to the sixth aspect, in some possible implementations, a larger value of at least one of the following items indicates a smaller first parameter: the load and the SCS; or a larger value of at least one of the following items indicates a larger first parameter: the load and the SCS.

With reference to the sixth aspect, in some possible implementations, a quantity of the at least one first uplink carrier is a positive integer greater than 1.

For beneficial effects of the sixth aspect, refer to beneficial effects of the first aspect. Details are not described herein.

According to a seventh aspect, a communication apparatus is provided. The apparatus includes: a processing module, configured to determine a first parameter by a network device, where the first parameter is associated with at least one of the following items of at least one first uplink carrier: load and a subcarrier spacing SCS; and a communication module, configured to send the first parameter to a terminal device.

With reference to the seventh aspect, in some possible implementations, a larger value of at least one of the following items indicates a smaller first parameter: the load and the SCS; or a larger value of at least one of the following items indicates a larger first parameter: the load and the SCS.

With reference to the seventh aspect, in some possible implementations, a quantity of the at least one first uplink carrier is a positive integer greater than 1.

For beneficial effects of the seventh aspect, refer to beneficial effects of the second aspect. Details are not described herein again.

According to an eighth aspect, a communication apparatus is provided, where the apparatus includes: a communication module, configured to receive first information, where the first information includes correspondence information between at least one first uplink carrier and at least one second downlink carrier; and a processing module, configured to determine a second uplink carrier from the at least one first uplink carrier based on the first information, where the second uplink carrier is an uplink carrier for access in a first cell. The at least one first uplink carrier and a second downlink carrier are located in a second cell, and the at least one first uplink carrier is located in the first cell; or the at least one first uplink carrier and a first downlink carrier are located in the first cell.

With reference to the eighth aspect, in some possible implementations, the processing module is further configured to determine a signal strength of the at least one second downlink carrier, where the second uplink carrier is an uplink carrier corresponding to a downlink carrier with a highest signal strength in the at least one second downlink carrier.

With reference to the eighth aspect, in some possible implementations, the communication module is further configured to receive a first parameter of the at least one first uplink carrier, where the first parameter is associated with at least one of the following items of the at least one first uplink carrier: load and a subcarrier spacing SCS. The processing module is further configured to determine a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

With reference to the eighth aspect, in some possible implementations, the communication module is further configured to receive a first parameter of the at least one first uplink carrier, where the first parameter is associated with at least one of the following items of the at least one first uplink carrier: load and a subcarrier spacing SCS; and the processing module is further configured to determine a first value, where the second uplink carrier is an uplink carrier, in at least one third uplink carrier, with a highest signal strength of the at least one second downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

With reference to the eighth aspect, in some possible implementations, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

With reference to the eighth aspect, in some possible implementations, the third threshold is configured by the network device by using radio resource control RRC signaling; or the third threshold is predefined.

With reference to the eighth aspect, in some possible implementations, a larger value of at least one of the following items indicates a smaller first parameter: the load and the SCS; or a larger value of at least one of the following items indicates a larger first parameter: the load and the SCS.

With reference to the eighth aspect, in some possible implementations, a quantity of the at least one first uplink carrier is a positive integer greater than 1.

For beneficial effects of the eighth aspect, refer to beneficial effects of the third aspect. Details are not described herein.

According to a ninth aspect, a communication apparatus is provided. The apparatus includes: a processing module, configured to determine first information, where the first information includes correspondence information between at least one first uplink carrier and at least one second downlink carrier; and a communication module, configured to send the first information to a terminal device.

With reference to the ninth aspect, in some possible implementations, the communication module is further configured to send a first parameter of at least one first uplink carrier to the terminal device, where the first parameter is associated with at least one of the following items of the at least one first uplink carrier: load and a subcarrier spacing SCS.

With reference to the ninth aspect, in some possible implementations, a larger value of at least one of the following items indicates a smaller first parameter: the load and the SCS; or a larger value of at least one of the following items indicates a larger first parameter: the load and the SCS.

With reference to the ninth aspect, in some possible implementations, a quantity of the at least one first uplink carrier is a positive integer greater than 1.

For beneficial effects of the ninth aspect, refer to beneficial effects of the fourth aspect. Details are not described herein again.

According to a tenth aspect, a communication apparatus is provided. The apparatus includes: a communication module, configured to receive system information, where the system information includes configuration information for measuring a reference signal of a carrier for another terminal device; and a processing module, configured to measure the reference signal based on the system information.

For beneficial effects of the tenth aspect, refer to beneficial effects of the fifth aspect. Details are not described herein again.

According to an eleventh aspect, a communication apparatus is provided. The communication apparatus may be the terminal device in the foregoing method embodiments, or may be a chip disposed in the terminal device. The communication apparatus includes a transceiver and a processor, and optionally, further includes a memory. The memory is configured to store a computer program or instructions. The processor is coupled to the memory and the transceiver. When the processor executes the computer program or the instructions, the communication apparatus is enabled to perform the method performed by the terminal device in the foregoing method embodiments.

According to a twelfth aspect, a communication apparatus is provided. The communication apparatus may be the network device in the foregoing method embodiments, or may be a chip disposed in the network device. The communication apparatus includes a transceiver and a processor, and optionally, further includes a memory. The memory is configured to store a computer program or instructions. The processor is coupled to the memory and the transceiver. When the processor executes the computer program or the instructions, the communication apparatus is enabled to perform the method performed by the network device in the foregoing method embodiments.

According to a thirteenth aspect, this application provides a chip system. The chip system includes a processor, configured to implement functions of the terminal device or the network device in the methods according to the foregoing aspects. In a possible design, the chip system further includes a memory, configured to store program instructions and/or data. The chip system may include a chip, or may include a chip and another discrete component.

Optionally, the discrete device may be an interface or an interface circuit.

Optionally, the processor may be a processing circuit.

According to a fourteenth aspect, this application provides a computer-readable storage medium, where the computer-readable storage medium stores a computer program, and when the computer program is run, the method performed by the terminal device or the network device in the foregoing aspects is implemented.

According to a fifteenth aspect, a computer program product is provided, where the computer program product includes computer program code, and when the computer program code is run, the method performed by the terminal device or the network device in the foregoing aspects is performed.

### BRIEF DESCRIPTION OF DRAWINGS

FIG. 1 is a schematic diagram of a wireless communication system to which an embodiment of this application is applicable;
FIG. 2 is a schematic diagram of a method for determining an uplink carrier according to an embodiment of this application;
FIG. 3 is a schematic diagram of a carrier location according to an embodiment of this application;
FIG. 4 is a schematic diagram of another method for determining an uplink carrier according to an embodiment of this application;
FIG. 5 is a schematic diagram of a measurement method according to an embodiment of this application;
FIG. 6 is a schematic block diagram of a communication apparatus according to an embodiment of this application;
FIG. 7 is a schematic block diagram of another communication apparatus according to an embodiment of this application;
FIG. 8 is a schematic block diagram of still another communication apparatus according to an embodiment of this application;
FIG. 9 is a schematic block diagram of yet another communication apparatus according to an embodiment of this application;
FIG. 10 is a schematic block diagram of yet another communication apparatus according to an embodiment of this application;
FIG. 11 is a schematic block diagram of yet another communication apparatus according to an embodiment of this application;
FIG. 12 is a schematic block diagram of yet another communication apparatus according to an embodiment of this application; and
FIG. 13 is a schematic diagram of a structure of a chip according to an embodiment of this application.

### DESCRIPTION OF EMBODIMENTS

The following describes technical solutions of this application with reference to accompanying drawings.

The technical solution in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) communication system, and a future mobile communication system.

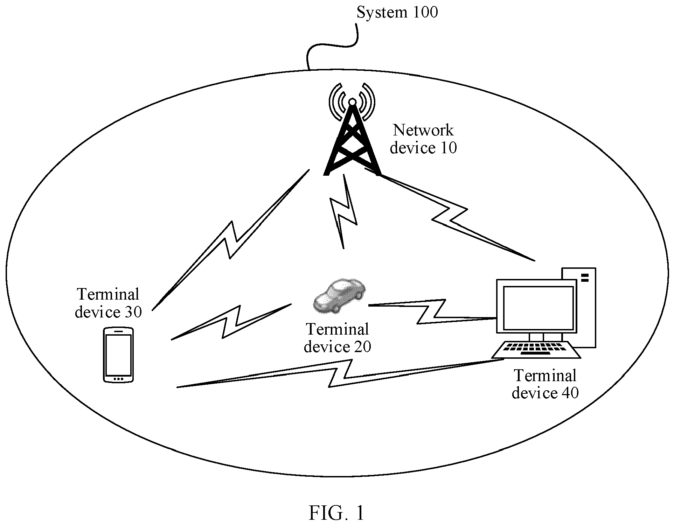

FIG. 1 is a schematic diagram of a wireless communication system 100 to which an embodiment of this application is applicable. As shown in FIG. 1, the wireless communication system 100 may include one or more network devices, for example, a network device 10 shown in FIG. 1. The wireless communication system 100 may further include one or more terminal devices, for example, a terminal device 20, a terminal device 30, and a terminal device 40 shown in FIG. 1.

FIG. 1 is only a schematic diagram. The communication system may further include another network device, for example, may further include a core network device, a wireless relay device, and a wireless backhaul device, which are not drawn in FIG. 1. Quantities of network devices and terminal devices included in the mobile communication system are not limited in embodiments of this application.

In the mobile communication system 100, the terminal device 20, the terminal device 30, and the terminal device 40 in embodiments of this application may also be referred to as a terminal, a terminal device, a mobile station (mobile station, MS), a mobile terminal (mobile terminal, MT), or the like. The terminal device in embodiments of this application may be a mobile phone (mobile phone), a tablet (Pad), or a computer with a wireless transceiver function, or may be a wireless terminal used in scenarios such as virtual reality (virtual reality, VR), augmented reality (augmented reality, AR), industrial control (industrial control), self driving (self driving), telemedicine (remote medical), a smart grid (smart grid), transportation safety (transportation safety), a smart city (smart city), a smart home (smart home), and the like. In this application, the terminal device and a chip that can be used in the terminal device are collectively referred to as a terminal device. It should be understood that a specific technology used by and a specific device form of the terminal device are not limited in embodiments of this application.

The network device 10 in this embodiment of this application may be a device configured to communicate with the terminal device. The network device may be a base station, an evolved NodeB (evolved nodeB, eNB), a home base station, an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB in an NR system. Alternatively, the network device may be a component or a part of a device that constitutes the base station, for example, a central unit (central unit, CU), a distributed unit (distributed unit, DU), or a baseband unit (baseband unit, BBU). It should be understood that a specific technology used by and a specific device form of the network device are not limited in embodiments of this application. In this application, the network device may be a network device itself, or may be a chip used in the network device to complete a wireless communication processing function.

It should be understood that, in this embodiment of this application, the terminal device or the network device includes a hardware layer and an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive).

In addition, various storage media described in this specification may represent one or more devices and/or other machine-readable storage media that are configured to store information. The term "machine-readable storage media" may include but is not limited to a radio channel, and various other media that can store, include, and/or carry instructions and/or data.

It should be understood that division of manners, cases, types, and embodiments in embodiments of this application are merely for ease of description, but should not constitute a special limitation, and features in various manners, types, cases, and embodiments may be combined when there is no contradiction.

It should be further understood that the terms "first", "second", and "third" in embodiments of this application are merely used for distinguishing, and should not be construed as any limitation on this application. For example, "first information" and "second information" in embodiments of this application indicate information transmitted between the network device and the terminal device.

Further, it should be understood that sequence numbers of the processes do not mean execution sequences in various embodiments of this application. The execution sequences of the processes should be determined based on functions and internal logic of the processes, and should not be construed as any limitation on the implementation processes of embodiments of this application.

It should be further noted that in embodiments of this application, "presetting", "predefining", or the like may be implemented by prestoring corresponding code or a table in a device (for example, including a terminal device and a network device), or in another manner that may be used to indicate related information. A specific implementation of "presetting", "predefining", or the like is not limited in this application, for example, a preset rule or a preset constant in embodiments of this application.

It should be noted that the term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, similar to "at least one of A, B, and C" or "at least one of A, B, or C", the expression is generally used to represent any one of the following: at least one A; at least one B; at least one C; at least one A and at least one B; at least one A and at least one C; and at least one A, at least one B, and at least one C. The foregoing uses three elements A, B, and C as an example to describe the optional items of the project. When there are more elements in the expression, the meaning of the expression may be obtained according to the foregoing rule.

As described above, the technical solutions of this application may be applied to various communication systems, and CA applied to the foregoing communication system is a key technology. In CA, cells may include a primary cell and a secondary cell. The primary cell and the secondary cell each include an uplink component carrier and a downlink component carrier. In a flexible access technology, a cell may include one downlink carrier and a plurality of uplink carriers without being limited by a CA requirement. UE may flexibly select an uplink carrier in the cell based on a service requirement.

Currently, in an implementation, a terminal device may access a corresponding uplink carrier based on a camped downlink carrier. In another implementation, the UE may compare with a threshold based on the camped downlink carrier during access. If a signal strength corresponding to an uplink carrier is less than the threshold, the terminal device performs access from an SLTL. If a signal strength corresponding to a downlink carrier is greater than the threshold, the terminal device performs access from an NUL.

In other words, when camping on a cell through a downlink carrier, the terminal device may access a corresponding uplink carrier. However, when the downlink carrier has only one low-frequency carrier for measurement as a camped downlink carrier, and the uplink carrier is in a high frequency band, or the uplink carrier and the downlink carrier are distributed at different site addresses, the uplink carrier cannot be directly selected based on measurement of the camped downlink carrier. In addition, how to select an uplink access carrier from a plurality of uplink carriers and consider load of the plurality of uplink carriers to avoid load imbalance on the uplink carriers is not resolved in a current technology.

This application provides a method for determining an uplink carrier, so that a terminal device can access a matched uplink carrier to balance load.

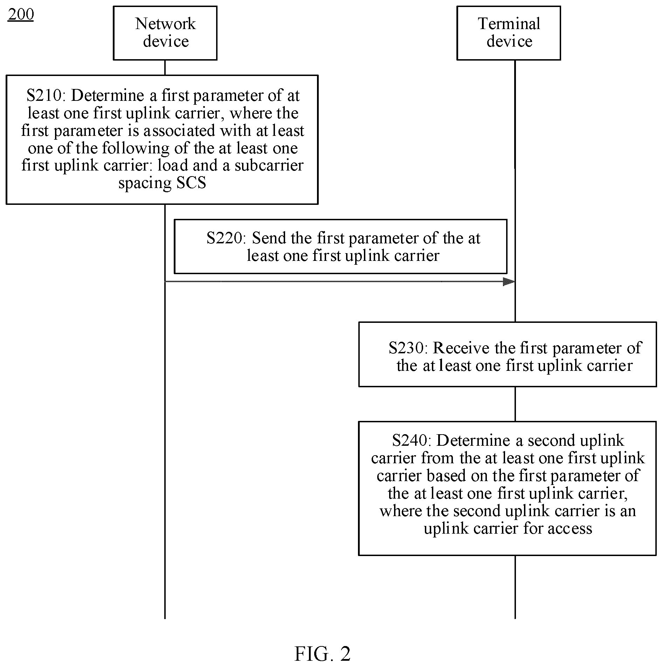

FIG. 2 is a schematic diagram of a method 200 for determining an uplink carrier according to an embodiment of this application. The method 200 may be performed by a terminal device and a network device, or may be performed by a chip in a terminal device and a chip in a network device. The method 200 may include steps S210 to S240. Processing performed by a single execution body (for example, the network device or the terminal device) shown in this embodiment of this application may alternatively be performed by a plurality of execution bodies. These execution bodies are logically and/or physically separated. For example, processing performed by the network device may be performed by at least one of a CU, a DU, and a radio unit (radio unit, RU).

S210: The network device determines a first parameter of at least one first uplink carrier, where the first parameter is associated with at least one of the following of the at least one first uplink carrier: load and an SCS.

S220: The network device sends the first parameter of the at least one first uplink carrier to the terminal device.

Steps S210 and S220 may be performed by the network device 10 in FIG. 1.

S230: Receive the first parameter of the at least one first uplink carrier from the network device.

S240: Determine a second uplink carrier from the at least one first uplink carrier based on the first parameter of the at least one first uplink carrier, where the second uplink carrier is an uplink carrier for access.

Steps 230 and 240 may be performed by any terminal device in the terminal device 20 to the terminal device 40 in FIG. 1.

In this embodiment of this application, the at least one first uplink carrier may include one or more uplink carriers. If the at least one first uplink carrier includes one uplink carrier, the second uplink carrier is the uplink carrier. If the at least one first uplink carrier includes a plurality of uplink carriers, the second uplink carrier is one of the plurality of uplink carriers. The carrier in this application is merely an example, and may alternatively be a partial bandwidth, a frequency band, or a beam. It may be understood that the "carrier" in embodiments of this application is still applicable to the technical solutions in this application after being replaced with a "partial bandwidth", a "frequency band", or a "beam".

It should be noted that, in this embodiment of this application, that the second uplink carrier is an uplink carrier for access may be understood as that the terminal device performs random access on the second uplink carrier.

It should be further noted that in some embodiments, the first parameter may also be referred to as a status value, and this is not limited.

According to the solution provided in this application, the terminal device can determine the second uplink carrier from the at least one first uplink carrier based on the received first parameter of the at least one first uplink carrier. Because the terminal device determines the second uplink carrier for access based on the first parameter of the at least one first uplink carrier, the terminal device can access a matched uplink carrier to balance load, thereby improving system performance.

It is noted above that the terminal device may determine the second uplink carrier from the at least one first uplink carrier based on the first parameter of the at least one first uplink carrier. The following describes several possible manners in which the terminal device determines the second uplink carrier.

### Manner 1:

The second uplink carrier is an uplink carrier with a largest first parameter in the at least one first uplink carrier; or the second uplink carrier is an uplink carrier with a smallest first parameter in the at least one first uplink carrier.

In this embodiment of this application, the second uplink carrier may be the uplink carrier with the largest first parameter in the at least one first uplink carrier; or may be the uplink carrier with the smallest first parameter in the at least one first uplink carrier. This is mainly related to the first parameter and the load and/or the SCS associated with the first parameter.

Optionally, in some embodiments, a larger value of at least one of the following items indicates a smaller first parameter: the load and the SCS; or a larger value of at least one of the following items indicates a larger first parameter: the load and the SCS.

In other words, the first parameter may be negatively correlated with the load and/or the SCS (that is, a larger load and/or SCS indicates a smaller first parameter), or may be positively correlated with the load and/or the SCS (that is, a larger load and/or SCS indicates a larger first parameter).

If the first parameter is negatively correlated with the load and/or the SCS, the second uplink carrier may be the uplink carrier with the largest first parameter in the at least one first uplink carrier. If the first parameter is positively correlated with the load and/or the SCS, the second uplink carrier may be the uplink carrier with the smallest first parameter in the at least one first uplink carrier.

The following describes a specific implementation process of determining the second uplink carrier in different cases.

Case 1: The second uplink carrier is the uplink carrier with the largest first parameter in the at least one first uplink carrier.

For example, it is assumed that the terminal device camps on a downlink carrier of a cell, and the downlink carrier corresponds to a plurality of uplink carriers, for example, five uplink carriers: an uplink carrier 1, an uplink carrier 2, an uplink carrier 3, an uplink carrier 4, and an uplink carrier 5. The terminal device may determine, based on a first parameter of each uplink carrier, a second uplink carrier for access.

The first parameter may be determined based on load or an SCS associated with the uplink carrier. In other words, a larger load associated with the uplink carrier indicates a smaller first parameter of the uplink carrier, and a smaller load associated with the uplink carrier indicates a larger first parameter of the uplink carrier. Similarly, a larger SCS of the uplink carrier indicates a smaller first parameter of the uplink carrier, and a smaller SCS of the uplink carrier indicates a larger first parameter of the uplink carrier.

Load is used as an example. It is assumed that load associated with the five uplink carriers (namely, the uplink carrier 1, the uplink carrier 2, the uplink carrier 3, the uplink carrier 4, and the uplink carrier 5) is sequentially 5, 4, 7, 2, and 4. In an implementation, because the load of the uplink carrier 4 in the five uplink carriers is the smallest, correspondingly, the first parameter of the uplink carrier 4 is the largest. In this case, the terminal device may select the uplink carrier 4 as the second uplink carrier for access.

In another implementation, the terminal device may sort the five uplink carriers based on a size of associated load. A sequence obtained after the sorting is: uplink carrier 3 > uplink carrier 1 > uplink carrier 2 = uplink carrier 5 > uplink carrier 4. According to the sorting, the five uplink carriers are sorted based on the first parameter as follows: uplink carrier 4 > uplink carrier 5 = uplink carrier 2 > uplink carrier 1 > uplink carrier 3. Because the first parameter of the uplink carrier 4 is the largest, the terminal device may select the uplink carrier 4 as the second uplink carrier for access.

The SCS is used as an example. It is assumed that SCSs associated with the five uplink carriers (namely, the uplink carrier 1, the uplink carrier 2, the uplink carrier 3, the uplink carrier 4, and the uplink carrier 5) are sequentially 50 kHz, 40 kHz, 70 kHz, 20 kHz, and 40 kHz. In an implementation, because the SCS of the uplink carrier 4 in the five uplink carriers is the smallest, and correspondingly, the first parameter of the uplink carrier 4 is the largest, the terminal device may select the uplink carrier 4 as the second uplink carrier for access.

In another implementation, the terminal device may sort the five uplink carriers based on a size of associated load. A sequence obtained after the sorting is: uplink carrier 3 > uplink carrier 1 > uplink carrier 2 = uplink carrier 5 > uplink carrier 4. According to the sorting, the five uplink carriers are sorted based on the first parameter as follows: uplink carrier 4 > uplink carrier 5 = uplink carrier 2 > uplink carrier 1 > uplink carrier 3. Because the first parameter of the uplink carrier 4 is the largest, the terminal device may select the uplink carrier 4 as the second uplink carrier for access.

Case 2: The second uplink carrier is the uplink carrier with the smallest first parameter in the at least one first uplink carrier.

For example, it is assumed that the terminal device camps on a downlink carrier of a cell, and the downlink carrier corresponds to a plurality of uplink carriers, for example, five uplink carriers: an uplink carrier 1, an uplink carrier 2, an uplink carrier 3, an uplink carrier 4, and an uplink carrier 5. The terminal device may determine, based on a first parameter of each uplink carrier, a second uplink carrier for access.

The first parameter may be determined based on load or an SCS associated with the uplink carrier. In other words, a larger load associated with the uplink carrier indicates a larger first parameter of the uplink carrier, and a smaller load associated with the uplink carrier indicates a smaller first parameter of the uplink carrier. Similarly, a larger SCS of the uplink carrier indicates a larger first parameter of the uplink carrier, and a smaller SCS of the uplink carrier indicates a smaller first parameter of the uplink carrier.

Load is used as an example. It is assumed that load associated with the five uplink carriers (namely, the uplink carrier 1, the uplink carrier 2, the uplink carrier 3, the uplink carrier 4, and the uplink carrier 5) is sequentially 5, 4, 7, 2, and 4. In an implementation, because the load of the uplink carrier 4 in the five uplink carriers is the smallest, correspondingly, the first parameter of the uplink carrier 4 is the smallest. In this case, the terminal device may select the uplink carrier 4 as the second uplink carrier for access.

In another implementation, the terminal device may sort the five uplink carriers based on a size of associated load. A sequence obtained after the sorting is: uplink carrier 3 > uplink carrier 1 > uplink carrier 2 = uplink carrier 5 > uplink carrier 4. According to the sorting, the five uplink carriers are sorted based on the first parameter as follows: uplink carrier 3 > uplink carrier 1 = uplink carrier 2 > uplink carrier 5 > uplink carrier 4. Because the first parameter of the uplink carrier 4 is the smallest, the terminal device may select the uplink carrier 4 as the second uplink carrier for access.

The SCS is used as an example. It is assumed that SCSs associated with the five uplink carriers (namely, the uplink carrier 1, the uplink carrier 2, the uplink carrier 3, the uplink carrier 4, and the uplink carrier 5) are sequentially 50 kHz, 40 kHz, 70 kHz, 20 kHz, and 40 kHz. In an implementation, because the SCS of the uplink carrier 4 in the five uplink carriers is the smallest, and correspondingly, the first parameter of the uplink carrier 4 is the smallest, the terminal device may select the uplink carrier 4 as the second uplink carrier for access.

In another implementation, the terminal device may sort the five uplink carriers based on a size of an associated SCS. A sequence obtained after the sorting is: uplink carrier 3 > uplink carrier 1 > uplink carrier 2 = uplink carrier 5 > uplink carrier 4. According to the sorting, the five uplink carriers are sorted based on the first parameter as follows: uplink carrier 3 > uplink carrier 1 = uplink carrier 2 > uplink carrier 5 > uplink carrier 4. Because the first parameter of the uplink carrier 4 is the smallest, the terminal device may select the uplink carrier 4 as the second uplink carrier for access.

According to the solution provided in this application, the second uplink carrier determined by the terminal device may be the uplink carrier with the largest or smallest first parameter in the at least one first uplink carrier. The first parameter is associated with at least one of the following items of the at least one first uplink carrier: the load and the SCS, so that the terminal device accesses the matched uplink carrier based on the first parameter, thereby reducing an access latency and balancing load, and improving system performance.

### Manner 2:

The method 200 may further include: determining a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

In this embodiment of this application, the second uplink carrier may be the uplink carrier with the largest sequence number in the at least one third uplink carrier, or may be the uplink carrier with the smallest sequence number in the at least one third uplink carrier. The at least one third uplink carrier in this embodiment of this application may be an uplink carrier whose first parameter is greater than the first value in the at least one first uplink carrier, or may be an uplink carrier whose first parameter is less than the first value in the at least one first uplink carrier. This is not limited.

It should be understood that, in some embodiments, the at least one third uplink carrier in this embodiment of this application may be an uplink carrier whose first parameter is greater than or equal to (or referred to as not less than) the first value in the at least one first uplink carrier, or may be an uplink carrier whose first parameter is less than or equal to (or referred to as not greater than) the first value in the at least one first uplink carrier. This is not limited.

In this embodiment of this application, the at least one third uplink carrier may be an uplink carrier whose first parameter is greater than the first value in the at least one first uplink carrier, or may be an uplink carrier whose first parameter is less than the first value in the at least one first uplink carrier. This is mainly related to the first parameter and load and/or an SCS associated with the first parameter.

Optionally, in some embodiments, a larger value of at least one of the following items indicates a smaller first parameter: the load and the SCS; or a larger value of at least one of the following items indicates a larger first parameter: the load and the SCS.

In other words, the first parameter may be negatively correlated with the load and/or the SCS (that is, a larger load and/or SCS indicates a smaller first parameter), or may be positively correlated with the load and/or the SCS (that is, a larger load and/or SCS indicates a larger first parameter).

If the first parameter is negatively correlated with the load and/or the SCS, the at least one third uplink carrier may be an uplink carrier whose first parameter is greater than the first value in the at least one first uplink carrier; or if the first parameter is positively correlated with the load and/or the SCS, the at least one third uplink carrier may be an uplink carrier whose first parameter is less than the first value in the at least one first uplink carrier.

The following describes a specific implementation process of determining the second uplink carrier in different cases.

Case 1: The at least one third uplink carrier is an uplink carrier whose first parameter is greater than the first value in the at least one first uplink carrier.
(1) The second uplink carrier is the uplink carrier with the largest sequence number in the at least one third uplink carrier.

In an implementation, the terminal device may first determine at least one third uplink carrier that meets a condition, and then select, from the at least one third uplink carrier, the second uplink carrier for access.

In another implementation, the terminal device may sort the at least one first uplink carrier in descending order according to sequence numbers, that is, sort the at least one first uplink carrier in descending order of sequence numbers. The terminal device may then sequentially compare a first parameter of each of the at least one first uplink carrier with the first value. If a first parameter of an uplink carrier is greater than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of sequence numbers.

It should be understood that a manner in which the terminal device determines the second uplink carrier is not limited to the foregoing implementation, provided that the determined second uplink carrier is an uplink carrier with the largest sequence number in uplink carriers whose first parameter is greater than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1 (whose sequence number is "0"), an uplink carrier 2 (whose sequence number is "1"), an uplink carrier 3 (whose sequence number is "2"), an uplink carrier 4 (whose sequence number is "3"), and an uplink carrier 5 (whose sequence number is "4"). Load of the uplink carriers is sequentially 5, 4, 7, 2, and 4, and first parameters may be sequentially 0.5, 0.8, 0.3, 0.9, and 0.8. If the first value is 0.6, the terminal device may first compare the first parameter 0.8 of the uplink carrier 5 with the largest sequence number with the first value. Because 0.8 > 0.6, the terminal device may select the uplink carrier 5 as the second uplink carrier for access.

### (2) The second uplink carrier is the uplink carrier with the smallest sequence number in the at least one third uplink carrier

In an implementation, the terminal device may first determine at least one third uplink carrier that meets a condition, and then select, from the at least one third uplink carrier, the second uplink carrier for access.

In another implementation, the terminal device may sort the at least one first uplink carrier in ascending order according to sequence numbers, that is, sort the at least one first uplink carrier in ascending order of sequence numbers. The terminal device may then sequentially compare a first parameter of each of the at least one first uplink carrier with the first value. If a first parameter of an uplink carrier is greater than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in ascending order of sequence numbers.

It should be understood that a manner in which the terminal device determines the second uplink carrier is not limited to the foregoing implementation, provided that the determined second uplink carrier is an uplink carrier with the smallest sequence number in uplink carriers whose first parameter is greater than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1 (whose sequence number is "0"), an uplink carrier 2 (whose sequence number is "1"), an uplink carrier 3 (whose sequence number is "2"), an uplink carrier 4 (whose sequence number is "3"), and an uplink carrier 5 (whose sequence number is "4"). Load of the uplink carriers is sequentially 5, 4, 7, 2, and 4, and first parameters may be sequentially 0.5, 0.8, 0.3, 0.9, and 0.8. If the first value is 0.6, the terminal device may first compare the first parameter 0.5 of the uplink carrier 1 with the smallest sequence number with the value. Because 0.5 < 0.6, the terminal device may then compare the first parameter 0.8 of the uplink carrier 2 with the next smallest sequence number with the value. Because 0.8 > 0.6, the terminal device may select the uplink carrier 2 as the second uplink carrier for access.

Case 2: The at least one third uplink carrier is an uplink carrier whose first parameter is less than the first value in the at least one first uplink carrier.
(1) The second uplink carrier is the uplink carrier with the largest sequence number in the at least one third uplink carrier.

In an implementation, the terminal device may first determine at least one third uplink carrier that meets a condition, and then select, from the at least one third uplink carrier, the second uplink carrier for access.

In another implementation, the terminal device may sort the at least one first uplink carrier in descending order according to sequence numbers, that is, sort the at least one first uplink carrier in descending order of sequence numbers. The terminal device may then sequentially compare a first parameter of each of the at least one first uplink carrier with the first value. If a first parameter of an uplink carrier is less than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of sequence numbers.

It should be understood that a manner in which the terminal device determines the second uplink carrier is not limited to the foregoing implementation, provided that the determined second uplink carrier is an uplink carrier with the largest sequence number in uplink carriers whose first parameter is less than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1 (whose sequence number is "0"), an uplink carrier 2 (whose sequence number is "1"), an uplink carrier 3 (whose sequence number is "2"), an uplink carrier 4 (whose sequence number is "3"), and an uplink carrier 5 (whose sequence number is "4"). Load of the uplink carriers is sequentially 5, 4, 7, 2, and 4, and first parameters may be sequentially 0.5, 0.8, 0.3, 0.9, and 0.8. If the first value is 0.6, the terminal device may first compare the first parameter 0.8 of the uplink carrier 5 with the largest sequence number with the first value. Because 0.8 > 0.6, the terminal device continues to compare the first parameter 0.9 of the uplink carrier 4 with the second largest sequence number with the first value. Similarly, because 0.9 > 0.6, the terminal device continues to compare the first parameter 0.3 of the uplink carrier 3 with the second largest sequence number with the first value, because 0.3 < 0.6, the terminal device may select the uplink carrier 3 as the second uplink carrier for access.

### (2) The second uplink carrier is the uplink carrier with the smallest sequence number in the at least one third uplink carrier

In an implementation, the terminal device may first determine at least one third uplink carrier that meets a condition, and then select, from the at least one third uplink carrier, the second uplink carrier for access.

In another implementation, the terminal device may sort the at least one first uplink carrier in ascending order according to sequence numbers, that is, sort the at least one first uplink carrier in ascending order of sequence numbers. The terminal device may then sequentially compare a first parameter of each of the at least one first uplink carrier with the first value. If a first parameter of an uplink carrier is less than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in ascending order of sequence numbers.

It should be understood that a manner in which the terminal device determines the second uplink carrier is not limited to the foregoing implementation, provided that the determined second uplink carrier is an uplink carrier with the smallest sequence number in uplink carriers whose first parameter is less than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1 (whose sequence number is "0"), an uplink carrier 2 (whose sequence number is "1"), an uplink carrier 3 (whose sequence number is "2"), an uplink carrier 4 (whose sequence number is "3"), and an uplink carrier 5 (whose sequence number is "4"). Load of the uplink carriers is sequentially 5, 4, 7, 2, and 4, and first parameters may be sequentially 0.5, 0.8, 0.3, 0.9, and 0.8. If the first value is 0.6, the terminal device may first compare the first parameter 0.5 of the uplink carrier 1 with the smallest sequence number with the first value. Because 0.5 = 0.5, the terminal device may compare the first parameter 0.8 of the uplink carrier 2 with the next smallest sequence number with the first value. Because 0.8 > 0.6, the terminal device may continue to compare the first parameter 0.3 of the uplink carrier 3 with the next smallest sequence number with the first value. Since 0.3 < 0.6, the terminal device may select the uplink carrier 3 as the second uplink carrier for access.

According to the solution provided in this application, the second uplink carrier determined by the terminal device may be the uplink carrier with the largest or smallest sequence number in the at least one third uplink carrier, and the third uplink carrier is an uplink carrier whose first parameter is greater than the first value in the at least one first uplink carrier, or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

### Manner 3:

The method 200 may further include: determining a first value, where the second uplink carrier is an uplink carrier with a highest signal strength in at least one third uplink carrier; or the second uplink carrier is an uplink carrier, in at least one third uplink carrier, with a highest signal strength of a downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

In this embodiment of this application, the at least one third uplink carrier may be an uplink carrier whose first parameter is greater than the first value in the at least one first uplink carrier, or may be an uplink carrier whose first parameter is less than the first value in the at least one first uplink carrier. The second uplink carrier may be an uplink carrier with the highest signal strength in the at least one third uplink carrier, or may be the uplink carrier, in the at least one third uplink carrier, with the highest signal strength of the downlink carrier associated with the at least one third uplink carrier. The downlink carrier associated with the first uplink carrier may be understood as a downlink carrier that has correlation with the first uplink carrier in terms of signal strength. In other words, the signal strength of the downlink carrier may be used to infer the signal strength of the first uplink carrier. For example, the downlink carrier associated with the first uplink carrier may be a downlink carrier in a carrier aggregation cell of the first uplink carrier, or may be a downlink carrier that is configured by the network device for the terminal device and that has an association relationship with the first uplink carrier. The downlink carrier associated with the first uplink carrier may belong to a same frequency band as the first uplink carrier, or may be in a frequency band higher than that of the first uplink carrier. Downlink carriers associated with all first uplink carriers may be the same or may be different. In addition, a signal strength of a carrier may be replaced with another parameter that can reflect whether the carrier is suitable for access of the terminal device, such as channel quality and coverage performance of the carrier.

It should be understood that, in some embodiments, the at least one third uplink carrier in this embodiment of this application may be an uplink carrier whose first parameter is greater than or equal to (or referred to as not less than) the first value in the at least one first uplink carrier, or may be an uplink carrier whose first parameter is less than or equal to (or referred to as not greater than) the first value in the at least one first uplink carrier. This is not limited.

The following describes a specific implementation process of determining the second uplink carrier in different cases.

Case 1: The at least one third uplink carrier is an uplink carrier whose first parameter is greater than the first value in the at least one first uplink carrier.
(1) The second uplink carrier is the uplink carrier with the highest signal strength in the at least one third uplink carrier

In an implementation, the terminal device may first determine at least one third uplink carrier that meets a condition, and then select, from the at least one third uplink carrier, the second uplink carrier for access.

In another implementation, the terminal device may sort the at least one first uplink carrier in descending order according to signal strengths, that is, sort the at least one first uplink carrier in descending order of signal strengths. The terminal device may then sequentially compare a first parameter of each of the at least one first uplink carrier with the first value. If a first parameter of an uplink carrier is greater than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of signal strengths.

It should be understood that a manner in which the terminal device determines the second uplink carrier is not limited to the foregoing implementation, provided that the determined second uplink carrier is an uplink carrier with the highest signal strength in uplink carriers whose first parameter is greater than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1, an uplink carrier 2, an uplink carrier 3, an uplink carrier 4, and an uplink carrier 5. Signal strengths of the uplink carriers are sequentially -80 dBm, -70 dBm, -60 dBm, -110 dBm, and -100 dBm respectively, and first parameters are sequentially 0.5, 0.4, 0.7, 0.2, and 0.4 respectively. If the first value is 0.5, the terminal device may first compare the first parameter 0.7 of the uplink carrier 3 with the highest signal strength with the first value. Because 0.7 > 0.5, the terminal device may select the uplink carrier 3 as the second uplink carrier for access.

(2) The second uplink carrier is the uplink carrier, in the at least one third uplink carrier, with the highest signal strength of the downlink carrier associated with the at least one third uplink carrier.

In an implementation, the terminal device may first determine at least one third uplink carrier that meets a condition, and then select, from the at least one third uplink carrier, the second uplink carrier for access.

In another implementation, the terminal device may sort, in descending order according to signal strengths, downlink carriers associated with the at least one first uplink carrier, that is, sort, in descending order of signal strengths, the downlink carriers associated with the at least one first uplink carrier. The terminal device may then sequentially compare a first parameter of each of the at least one first uplink carrier with the first value. If a first parameter of an uplink carrier is greater than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of signal strengths.

It should be understood that a manner in which the terminal device determines the second uplink carrier is not limited to the foregoing implementation, provided that the determined second uplink carrier is an uplink carrier corresponding to the downlink carrier with the highest signal strength in downlink carriers associated with the uplink carriers and whose first parameter is greater than the first value in the at least one first uplink carrier, and another implementation is also applicable to this embodiment.

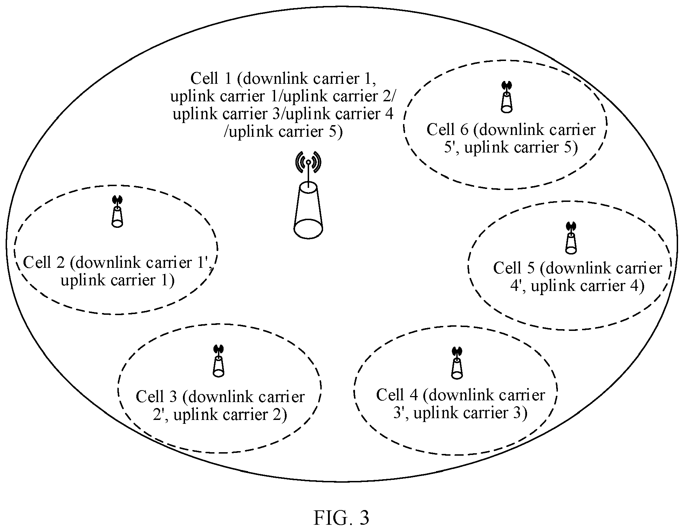

For example, FIG. 3 is a schematic diagram of a carrier location according to an embodiment of this application. Refer to FIG. 3. It is assumed that a terminal device camps on a downlink carrier of a cell (namely, a cell 1 in FIG. 3), and the downlink carrier corresponds to a plurality of uplink carriers, for example, five uplink carriers: an uplink carrier 1, an uplink carrier 2, an uplink carrier 3, an uplink carrier 4, and an uplink carrier 5. First parameters are sequentially 0.5, 0.4, 0.7, 0.2, and 0.4 respectively, downlink carriers associated with the five uplink carriers in other cells (for example, a cell 2, a cell 3, a cell 4, a cell 5, and a cell 6 shown in FIG. 3) are a downlink carrier 1', a downlink carrier 2', a downlink carrier 3', a downlink carrier 4', and a downlink carrier 5' respectively, and signal strengths of the downlink carriers are sequentially -80 dBm, -70 dBm, -60 dBm, -110 dBm, and -100 dBm respectively. If the first value is 0.5, the terminal device may first compare the first parameter 0.7 of the uplink carrier 3 corresponding to the downlink carrier with the highest signal strength with the first value. Because 0.7 > 0.5, the terminal device may select the uplink carrier 3 as the second uplink carrier for access.

Case 2: The at least one third uplink carrier is an uplink carrier whose first parameter is less than the first value in the at least one first uplink carrier.
(1) The second uplink carrier is the uplink carrier with the highest signal strength in the at least one third uplink carrier

In an implementation, the terminal device may first determine at least one third uplink carrier that meets a condition, and then select, from the at least one third uplink carrier, the second uplink carrier for access.

In another implementation, the terminal device may sort the at least one first uplink carrier in descending order according to signal strengths, that is, sort the at least one first uplink carrier in descending order of signal strengths. The terminal device may then sequentially compare a first parameter of each of the at least one first uplink carrier with the first value. If a first parameter of an uplink carrier is less than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of signal strengths.

It should be understood that a manner in which the terminal device determines the second uplink carrier is not limited to the foregoing implementation, provided that the determined second uplink carrier is an uplink carrier with the highest signal strength in uplink carriers whose first parameter is less than the first value in the at least one first uplink carrier, and another implementation is also applicable to this embodiment.

For example, it is assumed that the terminal device camps on a downlink carrier of a cell, and the downlink carrier corresponds to a plurality of uplink carriers, for example, five uplink carriers: an uplink carrier 1, an uplink carrier 2, an uplink carrier 3, an uplink carrier 4, and an uplink carrier 5. Signal strengths of the uplink carriers are sequentially -80 dBm, -70 dBm, -60 dBm, -110 dBm, and -100 dBm respectively, and first parameters are sequentially 0.5, 0.4, 0.7, 0.2, and 0.4 respectively. If the first value is 0.5, the terminal device may first compare the first parameter 0.7 of the uplink carrier 3 with the highest signal strength with the first value. Because 0.7 > 0.5, the terminal device may then compare the first parameter 0.4 of the uplink carrier 2 with the second highest signal strength with the first value. Because 0.4 < 0.5, the terminal device may select the uplink carrier 2 as the second uplink carrier for access.

(2) The second uplink carrier is the uplink carrier, in the at least one third uplink carrier, with the highest signal strength of the downlink carrier associated with the at least one third uplink carrier.

In an implementation, the terminal device may first determine at least one third uplink carrier that meets a condition, and then select, from the at least one third uplink carrier, the second uplink carrier for access.

In another implementation, the terminal device may sort, in descending order according to signal strengths, downlink carriers associated with the at least one first uplink carrier, that is, sort, in descending order of signal strengths, the downlink carriers associated with the at least one first uplink carrier. The terminal device may then sequentially compare a first parameter of each of the at least one first uplink carrier with the first value. If a first parameter of an uplink carrier is less than the value, the terminal device may select the uplink carrier as the second uplink carrier. In other words, the uplink carrier that first meets the condition in the at least one sorted first uplink carrier is the second uplink carrier. In this implementation, the at least one first uplink carrier may alternatively not be sorted, and the first parameter of the first uplink carrier is directly compared with the first value in descending order of signal strengths.

It should be understood that a manner in which the terminal device determines the second uplink carrier is not limited to the foregoing implementation, provided that the determined second uplink carrier is an uplink carrier corresponding to the downlink carrier with the highest signal strength in downlink carriers associated with the uplink carriers and whose first parameter is less than the first value in the at least one first uplink carrier, and another implementation is also applicable to this embodiment.

For example, refer to FIG. 3. It is assumed that a terminal device camps on a downlink carrier of a cell (namely, a cell 1 in FIG. 3), and the downlink carrier corresponds to a plurality of uplink carriers, for example, five uplink carriers: an uplink carrier 1, an uplink carrier 2, an uplink carrier 3, an uplink carrier 4, and an uplink carrier 5. First parameters are sequentially 0.5, 0.4, 0.7, 0.2, and 0.4 respectively, downlink carriers associated with the five uplink carriers in other cells (for example, a cell 2, a cell 3, a cell 4, a cell 5, and a cell 6 shown in FIG. 3) are a downlink carrier 1', a downlink carrier 2', a downlink carrier 3', a downlink carrier 4', and a downlink carrier 5' respectively, and signal strengths of the downlink carriers are sequentially -80 dBm, -70 dBm, -60 dBm, -110 dBm, and -100 dBm respectively. If the first value is 0.5, the terminal device may first compare the first parameter 0.7 of the uplink carrier 3 associated with the downlink carrier 3' with the highest signal strength with the first value. Because 0.7 > 0.5, the terminal device may then compare the first parameter 0.4 of the uplink carrier 2 associated with the downlink carrier 2' with the second highest signal strength with the first value. Because 0.4 < 0.5, the terminal device may select the uplink carrier 3 as the second uplink carrier for access.

According to the solution provided in this application, the second uplink carrier determined by the terminal device may be the uplink carrier with the highest signal strength in the at least one third uplink carrier, or the second uplink carrier may be the uplink carrier, in the at least one third uplink carrier, with the highest signal strength of the downlink carrier associated with the at least one third uplink carrier. The third uplink carrier is an uplink carrier whose first parameter is greater than the first value in the at least one first uplink carrier; or the third uplink carrier is an uplink carrier whose first parameter is less than the first value in the at least one first uplink carrier. Because the terminal device determines, from the at least one third uplink carrier obtained through screening, the second uplink carrier for access, a selection range is narrowed. Further, an access latency can be reduced, thereby improving system performance.

In manner 3, the terminal device may determine the at least one third uplink carrier based on the first value, and determine, from the at least one third uplink carrier, the second uplink carrier for access. The first value may be determined in the following manner.

Optionally, in some embodiments, the first value is greater than or equal to 0 and less than or equal to a third threshold. The third threshold is associated with at least one of the following: a quality of service (quality of service, QoS) level, a buffer status report (buffer status report, BSR) level, a type of the terminal device, a latency requirement, and a service type of the terminal device.

The third threshold in this embodiment of this application varies with at least one of the foregoing items, and the first value may be any value from 0 to the third threshold.

In this application, an example is used in which the third threshold is associated with the type of the terminal device. The terminal device may be any terminal device among a terminal device supporting ultra-reliable and low latency communication (ultra-reliable and low latency communication, URLLC), a terminal device supporting enhanced mobile broadband (enhanced mobile broadband, eMBB), and a terminal device supporting massive machine type communication (massive machine type communication, mMTC).

For example, if the terminal device is a terminal device supporting URLLC, the third threshold may be 1; if the terminal device is a terminal device supporting eMBB, the third threshold may be 2; or if the terminal device is a terminal device supporting mMTC, the third threshold may be 3. In other words, the third threshold in the case of the terminal device supporting URLLC < the third threshold in the case of the terminal device supporting eMBB < the third threshold in the case of the terminal device supporting mMTC.

It should be noted that, when the third threshold is different, the first value may be the same or may be different. This is not limited.

For example, if the third threshold is 1, the first value may be 0.5. If the third threshold is 2, the first value may be 0.5 or 0.6. Certainly, when the third threshold is 1, the first value may be 0.5 or 0.6. This is not limited.

It may be understood that when the first value is different, a quantity of the at least one third uplink carrier in the foregoing manner 3 may be different.

In manner 3, it is assumed that first parameters of the foregoing five uplink carriers (namely, the uplink carrier 1, the uplink carrier 2, the uplink carrier 3, the uplink carrier 4, and the uplink carrier 5) are respectively 0.5, 0.4, 0.7, 0.2, and 0.4, and the first value is 0.5. Because the first parameters of the uplink carrier 1 and the uplink carrier 3 are greater than the first value 0.5, the third uplink carriers in this embodiment of this application may include the uplink carrier 1 and the uplink carrier 3. In this case, the terminal device may determine, from the two uplink carriers based on signal strengths of the two uplink carriers, the second uplink carrier for access.

If the first value is 0.6, because the first parameter of the uplink carrier 3 is greater than the first value 0.6, the third uplink carrier in this embodiment of this application may include the uplink carrier 3. In this case, the terminal device may select the uplink carrier 3 as the second uplink carrier for access.

Certainly, in some embodiments, if the at least one third uplink carrier is an uplink carrier whose first parameter is greater than the first value in the at least one first uplink carrier, the first value may be excessively large, and there is no uplink carrier whose first parameter is greater than the first value in the at least one first uplink carrier, that is, there is no at least one third uplink carrier that meets the condition. In this case, the third threshold may be scaled, the first value is determined based on the scaled third threshold, and the at least one third uplink carrier is determined.

For example, it is still assumed that first parameters of the foregoing five uplink carriers (namely, the uplink carrier 1, the uplink carrier 2, the uplink carrier 3, the uplink carrier 4, and the uplink carrier 5) are respectively 0.5, 0.4, 0.7, 0.2, and 0.4, the third threshold is 1, and the first value is 0.8. Because there is no uplink carrier whose first parameter is greater than the first value 0.8 in the five uplink carriers, the third threshold may be scaled. For example, the third threshold is scaled to 0.5, and the first value may be 0.4. Because the first parameters of the uplink carrier 1, the uplink carrier 2, the uplink carrier 3, and the uplink carrier 5 are greater than the first value 0.4, the third uplink carriers in this embodiment of this application may include the uplink carrier 1, the uplink carrier 2, the uplink carrier 3, and the uplink carrier 5. In this case, the terminal device may determine, from the four uplink carriers based on signal strengths of the four uplink carriers, the second uplink carrier for access.

This is similar for the case in which the at least one third uplink carrier is an uplink carrier whose first parameter is less than the first value in the at least one first uplink carrier. For brevity, details are not described herein again.

In addition, in some embodiments, when determining the first value, the terminal device may alternatively randomly generate the first value within a range. Optionally, the range may be generated based on a function that uses the third threshold as a parameter. The range may alternatively be generated based on identification information of the terminal device. Optionally, the generation based on the identification information of the terminal device may be performed based on a function that uses the identification information of the terminal device as a parameter. The function may be a linear function or a non-linear function. For example, when the identification information is represented by an identity (identity, ID), the function may be ID mod N, where N is a parameter in the function. Optionally, N may be a positive integer. ID mod N identifies a remainder obtained after the ID is divided by N. For example, if ID is 10 and N is 3, ID mod N = 10 mod 3 = 1.

For example, when the identification information is represented by an international mobile subscriber identification (international mobile subscriber identification, IMSI), the function may be IMSI mod N, where N is a parameter in the function. Optionally, N may be a positive integer.

Optionally, in some embodiments, the third threshold is configured by the network device by using radio resource control (radio resource control, RRC) signaling, or the third threshold is predefined.

According to the solution provided in this application, the first value may be any value from 0 to the third threshold, and the third threshold is associated with at least one of the following: the QoS level, the BSR level, the type of the terminal device, the latency requirement, and the service type of the terminal device. In other words, the third threshold may vary with at least one of the foregoing items. Therefore, the first value may change with the third threshold, and the at least one third uplink carrier that meets the condition may be adjusted, thereby improving flexibility of selecting the second uplink carrier by the terminal device.

In this embodiment of this application, when the third threshold is configured by the network device by using radio resource control RRC signaling, the network device configures a plurality of optional third thresholds by using the radio resource control RRC signaling. The plurality of optional third thresholds correspond to different service types or levels. Specifically, the third threshold is associated with at least one of the following: the QoS level, the BSR level, the type of the terminal device, the latency requirement, and the service type of the terminal device.

In some embodiments, the terminal device may alternatively determine the third threshold based on at least one of the following options of the terminal device, where the following options include a QoS level, a BSR level, a type of the terminal device, a latency requirement, and a service type of the terminal device.

The foregoing describes three manners of determining the second uplink carrier. Essentially, in the three manners, the second uplink carrier is determined from the at least one first uplink carrier. For descriptions of the at least one first uplink carrier, refer to the following description.

The at least one first uplink carrier is an uplink carrier whose signal strength is greater than or equal to a first threshold in at least one uplink carrier configured by the network device; or
the at least one first uplink carrier is an uplink carrier, in at least one uplink carrier configured by the network device, with a signal strength of a downlink carrier associated with the at least one uplink carrier being greater than or equal to a second threshold.

The following describes content of the at least one first uplink carrier in different cases.

Case 1: The at least one first uplink carrier is an uplink carrier whose signal strength is greater than or equal to a first threshold in at least one uplink carrier configured by the network device.

For example, it is assumed that the system includes 10 uplink carriers: an uplink carrier 1, an uplink carrier 2, an uplink carrier 3, an uplink carrier 4, an uplink carrier 5, an uplink carrier 6, an uplink carrier 7, an uplink carrier 8, an uplink carrier 9, and an uplink carrier 10, and signal strengths of the 10 uplink carriers are sequentially -80 dBm, -70 dBm, -60 dBm, -110 dBm, -100 dBm, -180 dBm, -170 dBm, -160 dBm, -190 dBm, and -200 dBm respectively. If the first threshold is -120 dBm, the at least one first uplink carrier in this application may include the uplink carrier 1, the uplink carrier 2, the uplink carrier 3, the uplink carrier 4, and the uplink carrier 5. In other words, the network device may configure the five uplink carriers in a cell.

Case 2: The at least one first uplink carrier is an uplink carrier, in at least one uplink carrier configured by the network device, with a signal strength of a downlink carrier associated with the at least one uplink carrier being greater than or equal to a second threshold.

For example, it is assumed that the system includes 10 uplink carriers: an uplink carrier 1, an uplink carrier 2, an uplink carrier 3, an uplink carrier 4, an uplink carrier 5, an uplink carrier 6, an uplink carrier 7, an uplink carrier 8, an uplink carrier 9, and an uplink carrier 10, and signal strengths of downlink carriers associated with the 10 uplink carriers are sequentially -80 dBm, -70 dBm, -60 dBm, -110 dBm, -100 dBm, -180 dBm, -170 dBm, -160 dBm, -190 dBm, and -200 dBm respectively. If the first threshold is -120 dBm, the at least one first uplink carrier in this application may include the uplink carrier 1, the uplink carrier 2, the uplink carrier 3, the uplink carrier 4, and the uplink carrier 5. In other words, the network device may configure the five uplink carriers in a cell.

According to the solution provided in this application, the at least one first uplink carrier is an uplink carrier whose signal strength is greater than or equal to the first threshold in the at least one uplink carrier configured by the network device, or an uplink carrier, in the at least one uplink carrier configured by the network device, with a signal strength of a downlink carrier associated with the at least one uplink carrier being greater than or equal to the second threshold. Because the at least one first uplink carrier is selected by the network device from a plurality of uplink carriers, a selection range is narrowed for determining the second uplink carrier for the terminal device. Further, an access latency can be reduced, thereby improving system performance.

Optionally, in some embodiments, a larger value of at least one of the following items indicates a smaller first parameter: the load and the SCS; or a larger value of at least one of the following items indicates a larger first parameter: the load and the SCS.

In other words, the first parameter may be negatively correlated with the load and/or the SCS (that is, a larger load and/or SCS indicates a smaller first parameter), or may be positively correlated with the load and/or the SCS (that is, a larger load and/or SCS indicates a larger first parameter).

If the first parameter is negatively correlated with the load and/or the SCS, the second uplink carrier may be the uplink carrier with the largest first parameter in the at least one first uplink carrier. If the first parameter is positively correlated with the load and/or the SCS, the second uplink carrier may be the uplink carrier with the smallest first parameter in the at least one first uplink carrier. The following separately uses examples for description.
(1) A larger load and/or SCS indicates a smaller first parameter.

For example, it is assumed that the terminal device camps on a downlink carrier of a cell, and the downlink carrier corresponds to a plurality of uplink carriers, for example, five uplink carriers: an uplink carrier 1, an uplink carrier 2, an uplink carrier 3, an uplink carrier 4, and an uplink carrier 5. In this case, the terminal device may determine, based on load or SCSs associated with the five uplink carriers, first parameters of the five uplink carriers, and determine, based on the first parameters, the second uplink carrier for access (assuming that manner 1 is used as an example).

The first parameter may be determined based on load or an SCS associated with the uplink carrier. In other words, a larger load associated with the uplink carrier indicates a smaller first parameter of the uplink carrier, and a smaller load associated with the uplink carrier indicates a larger first parameter of the uplink carrier. Similarly, a larger SCS of the uplink carrier indicates a smaller first parameter of the uplink carrier, and a smaller SCS of the uplink carrier indicates a larger first parameter of the uplink carrier.

Load is used as an example. It is assumed that load associated with the foregoing five uplink carriers (namely, the uplink carrier 1, the uplink carrier 2, the uplink carrier 3, the uplink carrier 4, and the uplink carrier 5) is sequentially 5, 4, 7, 6, and 4. In an implementation, because the load of the uplink carrier 2 and the load of the uplink carrier 5 in the four uplink carriers are the smallest and are both 4, correspondingly, the first parameter of the uplink carrier 2 and the first parameter of the uplink carrier 5 are the largest in parallel. In this case, if the foregoing manner 1 is used, the terminal device may select the uplink carrier 2 or the uplink carrier 5 as the second uplink carrier for access.

In another implementation, the terminal device may sort the five uplink carriers based on a size of associated load. A sequence obtained after the sorting is: uplink carrier 3 > uplink carrier 4 > uplink carrier 1 > uplink carrier 2 = uplink carrier 5. According to the sorting, the five uplink carriers are sorted based on the first parameter as follows: uplink carrier 5 = uplink carrier 2 > uplink carrier 1 > uplink carrier 4 > uplink carrier 3. Because the first parameter of the uplink carrier 5 and the first parameter of the uplink carrier 2 are the largest in parallel, if the foregoing manner 1 is used, the terminal device may select the uplink carrier 5 or the uplink carrier 2 as the second uplink carrier for access.

The SCS is used as an example. It is assumed that SCSs associated with the five uplink carriers (namely, the uplink carrier 1, the uplink carrier 2, the uplink carrier 3, the uplink carrier 4, and the uplink carrier 5) are sequentially 50 kHz, 40 kHz, 70 kHz, 60 kHz, and 40 kHz. In an implementation, because the SCS of the uplink carrier 5 and the SCS of the uplink carrier 2 in the five uplink carriers are the smallest in parallel, correspondingly, the first parameter of the uplink carrier 5 and the first parameter of the uplink carrier 2 are the largest in parallel. In this case, if the foregoing manner 1 is used, the terminal device may select the uplink carrier 5 or the uplink carrier 2 as the second uplink carrier for access.

In another implementation, the terminal device may sort the five uplink carriers based on a size of associated load. A sequence obtained after the sorting is: uplink carrier 3 > uplink carrier 4 > uplink carrier 1 > uplink carrier 2 = uplink carrier 5. According to the sorting, the five uplink carriers are sorted based on the first parameter as follows: uplink carrier 5 = uplink carrier 2 > uplink carrier 1 > uplink carrier 4 > uplink carrier 3. Because the first parameter of the uplink carrier 5 and the first parameter of the uplink carrier 2 are the largest in parallel, if the foregoing manner 1 is used, the terminal device may select the uplink carrier 5 or the uplink carrier 2 as the second uplink carrier for access.

In some embodiments, the terminal device may alternatively not select the uplink carrier with the largest or smallest first parameter in the at least one first uplink carrier, and the terminal device may sequentially compare a first parameter of each of the at least one first uplink carrier with a value. If a first parameter of an uplink carrier is greater than the value, the terminal device may select the uplink carrier as the second uplink carrier. For example, if the load associated with the five uplink carriers is sequentially 5, 4, 7, 6, and 4, the first parameter may be sequentially 0.5, 0.8, 0.3, 0.4, and 0.8. If the value is 0.6, the terminal device may first compare the first parameter 0.5 of the uplink carrier 1 with the value. Because 0.5 < 0.6, the terminal device may then select the first parameter 0.8 of the uplink carrier 2 to compare with the value. Because 0.8 > 0.6, the terminal device may select the uplink carrier 2 as the second uplink carrier for access.

(2) A larger load and/or SCS indicates a larger first parameter.

Similarly, the terminal device may determine the first parameters of the five uplink carriers based on load or SCSs associated with the five uplink carriers, and determine, based on the first parameters, the second uplink carrier for access (it is assumed that the foregoing manner 1 is still used as an example).

The first parameter may be determined based on load or an SCS associated with the uplink carrier. In other words, a larger load associated with the uplink carrier indicates a larger first parameter of the uplink carrier, and a smaller load associated with the uplink carrier indicates a smaller first parameter of the uplink carrier. Similarly, a larger SCS of the uplink carrier indicates a larger first parameter of the uplink carrier, and a smaller SCS of the uplink carrier indicates a smaller first parameter of the uplink carrier.

Load is used as an example. It is assumed that load associated with the foregoing five uplink carriers (namely, the uplink carrier 1, the uplink carrier 2, the uplink carrier 3, the uplink carrier 4, and the uplink carrier 5) is sequentially 5, 4, 7, 6, and 4. In an implementation, because the load of the uplink carrier 2 and the load of the uplink carrier 5 in the five uplink carriers are the smallest, correspondingly, the first parameter of the uplink carrier 2 and the first parameter of the uplink carrier 5 are the smallest. In this case, the terminal device may select the uplink carrier 2 or the uplink carrier 5 as the second uplink carrier for access.

In another implementation, the terminal device may sort the five uplink carriers based on a size of associated load. A sequence obtained after the sorting is: uplink carrier 3 > uplink carrier 4 > uplink carrier 1 > uplink carrier 2 = uplink carrier 5. According to the sorting, the five uplink carriers are sorted based on the first parameter as follows: uplink carrier 3 > uplink carrier 4 > uplink carrier 1 > uplink carrier 2 = uplink carrier 5. Because the first parameter of the uplink carrier 2 and the first parameter of the uplink carrier 5 are the smallest, the terminal device may select the uplink carrier 2 or the uplink carrier 5 as the second uplink carrier for access.

The SCS is used as an example. It is assumed that SCSs associated with the five uplink carriers (namely, the uplink carrier 1, the uplink carrier 2, the uplink carrier 3, the uplink carrier 4, and the uplink carrier 5) are sequentially 50 kHz, 40 kHz, 70 kHz, 60 kHz, and 40 kHz. In an implementation, because the SCS of the uplink carrier 2 and the SCS of the uplink carrier 5 in the five uplink carriers are the smallest, correspondingly, the first parameter of the uplink carrier 2 and the first parameter of the uplink carrier 5 are the smallest. In this case, the terminal device may select the uplink carrier 2 or the uplink carrier 5 as the second uplink carrier for access.

In another implementation, the terminal device may sort the five uplink carriers based on a size of an associated SCS. A sequence obtained after the sorting is: uplink carrier 3 > uplink carrier 4 > uplink carrier 1 > uplink carrier 2 = uplink carrier 5. According to the sorting, the four uplink carriers are sorted based on the first parameter as follows: uplink carrier 3 > uplink carrier 4 > uplink carrier 1 > uplink carrier 2 = uplink carrier 5. Because the first parameter of the uplink carrier 2 and the first parameter of the uplink carrier 5 are the smallest, the terminal device may select the uplink carrier 2 or the uplink carrier 5 as the second uplink carrier for access.

In some embodiments, the terminal device may alternatively not select the uplink carrier with the largest or smallest first parameter in the at least one first uplink carrier, and the terminal device may sequentially compare a first parameter of each of the at least one first uplink carrier with a value. If a first parameter of an uplink carrier is greater than the value, the terminal device may select the uplink carrier as the second uplink carrier. For example, if the foregoing five uplink carriers (namely, the uplink carrier 1, the uplink carrier 2, the uplink carrier 3, the uplink carrier 4, and the uplink carrier 5) are sequentially 5, 4, 7, 6, and 4, the first parameters may be sequentially 0.5, 0.4, 0.7, 0.6, and 0.4. If the value is 0.6, the terminal device may first compare the first parameter 0.5 of the uplink carrier 1 with the value. Because 0.5 < 0.6, the terminal device may compare the first parameter 0.4 of the uplink carrier 2 with the value. Because 0.4 < 0.6, the terminal device may continue to compare the first parameter 0.7 of the uplink carrier 3 with the value. Because 0.7 > 0.6, the terminal device may use the uplink carrier 3 as the second uplink carrier for access.

It should be noted that the first threshold and/or the second threshold in this embodiment of this application may be pre-configured, or may be configured by the network device by using signaling, or may be specified in a protocol, or may be determined by the terminal device based on performance of the terminal device. The first threshold and/or the second threshold may be a fixed value, or may be a dynamic value. This is not limited. The terminal device may determine the first threshold and/or the second threshold based on performance of the terminal device based on a feature of the terminal device in a threshold configured by the network device.

It should be understood that the values shown in the foregoing embodiments are merely examples for description, and may alternatively be other values, and should not constitute a special limitation on this application.

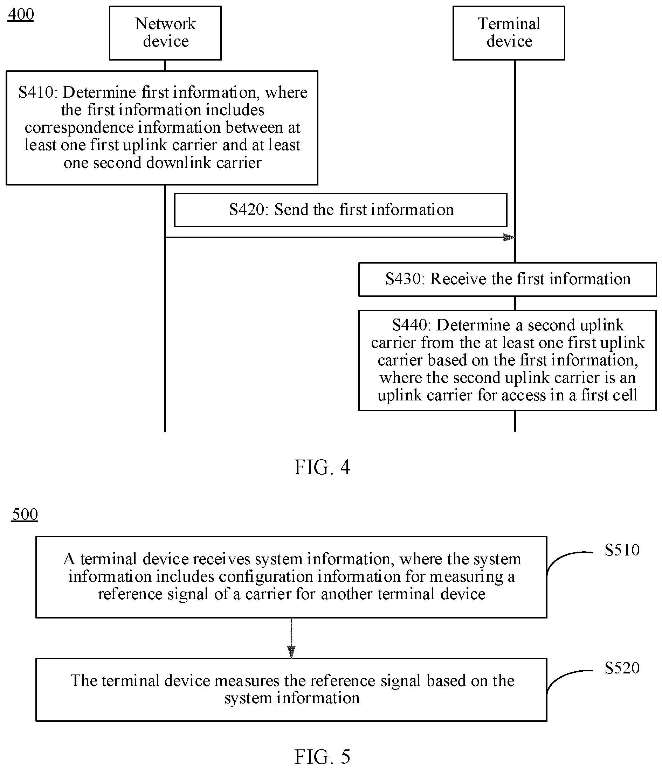

FIG. 4 is a schematic diagram of another method 400 for determining an uplink carrier according to an embodiment of this application. The method 400 may be performed by a terminal device and a network device, or may be performed by a chip in a terminal device and a chip in a network device. The method 400 may include steps S410 to S440.

S410: The network device determines first information, where the first information includes correspondence information between at least one first uplink carrier and at least one second downlink carrier.

S420: The network device sends the first information to the terminal device.

Steps S410 and S420 may be performed by the network device 10 in FIG. 1.

S430: The terminal device receives the first information.

S440: The terminal device determines a second uplink carrier from the at least one first uplink carrier based on the first information, where the second uplink carrier is an uplink carrier for access in a first cell.

The at least one first uplink carrier and a second downlink carrier are located in a second cell, and the at least one first uplink carrier is located in the first cell; or the at least one first uplink carrier and a first downlink carrier are located in the first cell.

Steps 430 and 440 may be performed by any terminal device in the terminal device 20 to the terminal device 40 in FIG. 1.

In this embodiment of this application, the at least one first uplink carrier may include one or more uplink carriers. If the at least one first uplink carrier includes one uplink carrier, the second uplink carrier is the uplink carrier. If the at least one first uplink carrier includes a plurality of uplink carriers, the second uplink carrier is one of the plurality of uplink carriers.

It should be noted that, in this embodiment of this application, that the second uplink carrier is an uplink carrier for access may be understood as that the terminal device performs random access on the second uplink carrier.

According to the solution provided in this application, the terminal device can determine the second uplink carrier from the at least one first uplink carrier based on the received correspondence information between the at least one first uplink carrier and the at least one second downlink carrier. Because the terminal device determines the second uplink carrier for access based on the correspondence information between the at least one first uplink carrier and the at least one second downlink carrier, the terminal device can access the matched uplink carrier, thereby ensuring coverage performance and improving a system throughput.

It is noted above that the terminal device determines the second uplink carrier from the at least one first uplink carrier based on the first information. The following describes several possible manners in which the terminal device determines the second uplink carrier.

### Manner 1:

The method 400 further includes: The terminal device determines a signal strength of the at least one second downlink carrier, where the second uplink carrier is an uplink carrier corresponding to a downlink carrier with a highest signal strength in the at least one second downlink carrier.

In this embodiment of this application, after receiving the first information and determining the correspondence information between the at least one first uplink carrier and the at least one second downlink carrier, the terminal device may first determine a signal strength of the at least one second downlink carrier, and determine, from the at least one second downlink carrier, the uplink carrier corresponding to the downlink carrier with the highest signal strength as the second uplink carrier for access.

Still refer to FIG. 3. It is assumed that the at least one first uplink carrier in this application includes five uplink carriers: an uplink carrier 1, an uplink carrier 2, an uplink carrier 3, an uplink carrier 4, and an uplink carrier 5, and the at least one second downlink carrier includes five downlink carriers: a downlink carrier 1', a downlink carrier 2', a downlink carrier 3', a downlink carrier 4', and a downlink carrier 5'. In this case, the terminal device may first determine signal strengths of the five downlink carriers. For example, the signal strengths of the five downlink carriers are sequentially -80 dBm, -70 dBm, -60 dBm, -110 dBm, and -100 dBm respectively. Because the signal strength of the downlink carrier 3' is the highest, the terminal device may select the uplink carrier 3 corresponding to the downlink carrier 3' as the second uplink carrier for access.

According to the solution provided in this application, the second uplink carrier determined by the terminal device may be the uplink carrier corresponding to the downlink carrier with the highest signal strength in the at least one second downlink carrier. A higher signal strength indicates a better coverage degree. Therefore, the terminal device accesses the matched uplink carrier based on the signal strength, thereby increasing an access probability and reducing an access latency, and improving system performance.

### Manner 2:

The method 400 further includes: The terminal device receives a first parameter of the at least one first uplink carrier, where the first parameter is associated with at least one of the following items of the at least one first uplink carrier: load and a subcarrier spacing SCS; and determines a first value, where the second uplink carrier is an uplink carrier with a largest sequence number in at least one third uplink carrier; or the second uplink carrier is an uplink carrier with a smallest sequence number in at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

For a specific implementation of manner 2 of this application, refer to related content in manner 2 in the foregoing method 200. Details are not described herein again.

### Manner 3:

The terminal device receives a first parameter of the at least one first uplink carrier, where the first parameter is associated with at least one of the following items of the at least one first uplink carrier: load and an SCS; and determines a first value, where the second uplink carrier is an uplink carrier, in at least one third uplink carrier, with a highest signal strength of the at least one second downlink carrier associated with the at least one third uplink carrier. The at least one third uplink carrier is an uplink carrier whose first parameter is greater than the first value in the at least one first uplink carrier; or the at least one third uplink carrier is an uplink carrier whose first parameter is less than the first value in the at least one first uplink carrier.

For a specific implementation of manner 3 of this application, refer to related content in manner 3 in the foregoing method 200. Details are not described herein again.

Optionally, in some embodiments, the first value is greater than or equal to 0 and less than or equal to a third threshold, and the third threshold is associated with at least one of the following: a QoS level, a BSR level, a type of a terminal device, a latency requirement, and a service type of the terminal device.

Optionally, in some embodiments, the third threshold is configured by the network device by using RRC signaling; or the third threshold is predefined.

Optionally, in some embodiments, a larger value of at least one of the following items indicates a smaller first parameter: the load and the SCS; or a larger value of at least one of the following items indicates a larger first parameter: the load and the SCS.

For all the foregoing embodiments, refer to related content in the method 200, and details are not described herein again.

FIG. 5 is a schematic diagram of a measurement method 500 according to an embodiment of this application. The method 500 may be performed by a terminal device, or may be performed by a chip in a terminal device. The method 500 may include steps S510 and S520.

S510: The terminal device receives system information, where the system information includes configuration information for measuring a reference signal of a carrier for another terminal device.

S520: The terminal device measures the reference signal based on the system information.

The terminal device in this embodiment of this application may be in an idle state. After receiving the system information, the terminal device may measure the reference signal.

In this embodiment of this application, a carrier measured in the configuration information of the another terminal device may be a carrier on a high frequency band, so that a reference signal on the carrier on the high frequency band may be sent as required. In an example, the reference signal on the carrier on the high frequency band is triggered and sent based on any one of a scheduling request (scheduling request, SR), a BSR, an uplink reference signal, or report information of the another terminal device. The report information may be transmitted by using RRC signaling; or the report information is carried in uplink control information (uplink control information, UCI); or the report information is included in an SR. Further, if the report information is carried in the UCI, the report information may be included in a first field in the UCI, where the first field is an existing field in the UCI; or the report information is included in a second field in the UCI, where the second field is a newly added field in the UCI. That the first field is an existing field in the UCI may be understood as that the first field is reused for the report information. Optionally, the high frequency band may be a millimeter wave band or any frequency band greater than or equal to 4.9 GHz.

In this application, when a carrier measured by the terminal device is the same as a carrier measured in configuration information of another terminal device, the terminal device may measure a reference signal of the terminal device based on the configuration information for measuring a reference signal of a carrier for another terminal device, so that resources can be saved.

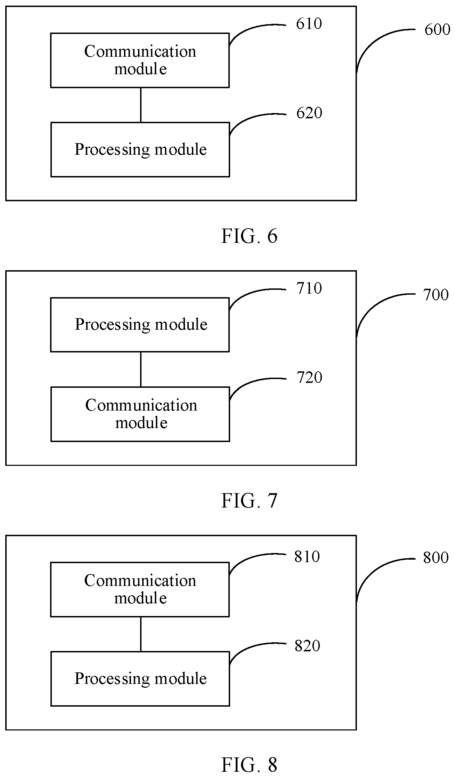

The foregoing describes in detail the method for determining an uplink carrier in embodiments of this application with reference to FIG. 1 to FIG. 5. The following describes apparatuses in embodiments of this application with reference to FIG. 6 to FIG. 13.

FIG. 6 is a schematic block diagram of a communication apparatus 600 according to an embodiment of this application. The apparatus 600 may correspond to the terminal device described in the method 200, and modules in the apparatus 600 are configured to perform actions or processing processes performed by the terminal device in the method 200. As shown in FIG. 6, the communication apparatus 600 may include:
a communication module 610, configured to receive a first parameter of at least one first uplink carrier from a network device, where the first parameter is associated with at least one of the following items of the at least one first uplink carrier: load and a subcarrier spacing SCS; and
a processing module 620, configured to determine a second uplink carrier from the at least one first uplink carrier based on the first parameter of the at least one first uplink carrier, where the second uplink carrier is an uplink carrier for access.

Optionally, in some embodiments, the second uplink carrier is an uplink carrier with a largest first parameter in the at least one first uplink carrier; or
the second uplink carrier is an uplink carrier with a smallest first parameter in the at least one first uplink carrier.

Optionally, in some embodiments, the processing module 620 is further configured to determine a first value, where
the second uplink carrier is an uplink carrier with a largest sequence number in at least one third uplink carrier; or
the second uplink carrier is an uplink carrier with a smallest sequence number in at least one third uplink carrier, where
the at least one third uplink carrier is an uplink carrier whose first parameter is greater than the first value in the at least one first uplink carrier; or
the at least one third uplink carrier is an uplink carrier whose first parameter of a downlink carrier associated with the at least one first uplink carrier is less than the first value in the at least one first uplink carrier.

Optionally, in some embodiments, the processing module 620 is further configured to:
determine a first value, where
the second uplink carrier is an uplink carrier with a highest signal strength in at least one third uplink carrier; or
the second uplink carrier is an uplink carrier, in at least one third uplink carrier, with a highest signal strength of a downlink carrier associated with the at least one third uplink carrier, where
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

Optionally, in some embodiments, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

Optionally, in some embodiments, the third threshold is configured by the network device by using radio resource control RRC signaling; or
the third threshold is predefined.

Optionally, in some embodiments, the at least one first uplink carrier is an uplink carrier whose signal strength is greater than or equal to a first threshold in at least one uplink carrier configured by the network device; or
the at least one first uplink carrier is an uplink carrier, in at least one uplink carrier configured by the network device, with a signal strength of a downlink carrier associated with the at least one uplink carrier being greater than or equal to a second threshold.

Optionally, in some embodiments, a larger value of at least one of the following items indicates a smaller first parameter: the load and the SCS; or
a larger value of at least one of the following items indicates a larger first parameter: the load and the SCS.

Optionally, in some embodiments, a quantity of the at least one first uplink carrier is a positive integer greater than 1.

FIG. 7 is a schematic block diagram of a communication apparatus 700 according to an embodiment of this application. The apparatus 700 may correspond to the network device described in the method 200, and modules in the apparatus 700 are configured to perform actions or processing processes performed by the network device in the method 200. As shown in FIG. 7, the communication apparatus 700 may include:
a processing module 710, configured to determine, by a network device, a first parameter, where the first parameter is associated with at least one of the following items of at least one first uplink carrier: load and a subcarrier spacing SCS; and
a communication module 720, configured to send the first parameter to a terminal device.

Optionally, in some embodiments, a larger value of at least one of the following items indicates a smaller first parameter: the load and the SCS; or
a larger value of at least one of the following items indicates a larger first parameter: the load and the SCS.

Optionally, in some embodiments, a quantity of the at least one first uplink carrier is a positive integer greater than 1.

FIG. 8 is a schematic block diagram of a communication apparatus 800 according to an embodiment of this application. The apparatus 800 may correspond to the terminal device described in the method 400, and modules in the apparatus 800 are configured to perform actions or processing processes performed by the terminal device in the method 400. As shown in FIG. 8, the communication apparatus 800 may include:
a communication module 810, configured to receive first information, where the first information includes correspondence information between at least one first uplink carrier and at least one second downlink carrier; and
a processing module 820, configured to determine a second uplink carrier from the at least one first uplink carrier based on the first information, where the second uplink carrier is an uplink carrier for access in a first cell, where
the at least one first uplink carrier and a second downlink carrier are located in a second cell, and the at least one first uplink carrier is located in the first cell; or
the at least one first uplink carrier and a first downlink carrier are located in the first cell.

Optionally, in some embodiments, the processing module 820 is further configured to:
determine a signal strength of the at least one second downlink carrier, where
the second uplink carrier is an uplink carrier corresponding to a downlink carrier with a highest signal strength in the at least one second downlink carrier.

Optionally, in some embodiments, the communication module 810 is further configured to:
receive a first parameter of at least one first uplink carrier, where the first parameter is associated with at least one of the following items of the at least one first uplink carrier: load and a subcarrier spacing SCS.

The processing module 820 is further configured to determine a first value, where
the second uplink carrier is an uplink carrier with a largest sequence number in at least one third uplink carrier; or
the second uplink carrier is an uplink carrier with a smallest sequence number in at least one third uplink carrier, where
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

Optionally, in some embodiments, the communication module 810 is further configured to:
receive a first parameter of at least one first uplink carrier, where the first parameter is associated with at least one of the following items of the at least one first uplink carrier: load and a subcarrier spacing SCS.

The processing module 820 is further configured to:
determine a first value, where
the second uplink carrier is an uplink carrier, in at least one third uplink carrier, with a highest signal strength of the at least one second downlink carrier associated with the at least one third uplink carrier, where
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

Optionally, in some embodiments, the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

Optionally, in some embodiments, the third threshold is configured by the network device by using radio resource control RRC signaling; or
the third threshold is predefined.

Optionally, in some embodiments, a larger value of at least one of the following items indicates a smaller first parameter: the load and the SCS; or
a larger value of at least one of the following items indicates a larger first parameter: the load and the SCS.

Optionally, in some embodiments, a quantity of the at least one first uplink carrier is a positive integer greater than 1.

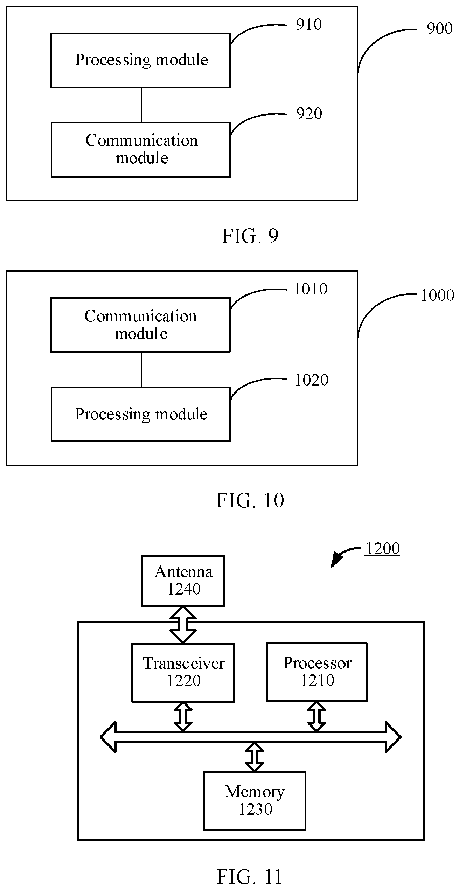

FIG. 9 is a schematic block diagram of a communication apparatus 900 according to an embodiment of this application. The apparatus 900 may correspond to the network device described in the method 400, and modules in the apparatus 900 are configured to perform actions or processing processes performed by the network device in the method 400. As shown in FIG. 9, the communication apparatus 900 may include:
a processing module 910, configured to determine first information, where the first information includes correspondence information between at least one first uplink carrier and at least one second downlink carrier; and
a communication module 920, configured to send the first information to a terminal device.

Optionally, in some embodiments, the communication module 920 is further configured to:
send a first parameter of at least one first uplink carrier to the terminal device, where the first parameter is associated with at least one of the following items of the at least one first uplink carrier: load and a subcarrier spacing SCS.

Optionally, in some embodiments, a larger value of at least one of the following items indicates a smaller first parameter: the load and the SCS; or
a larger value of at least one of the following items indicates a larger first parameter: the load and the SCS.

Optionally, in some embodiments, a quantity of the at least one first uplink carrier is a positive integer greater than 1.

FIG. 10 is a schematic block diagram of a communication apparatus 1000 according to an embodiment of this application. The apparatus 1000 may correspond to the terminal device described in the method 500, and modules in the apparatus 1000 are configured to perform actions or processing processes performed by the terminal device in the method 500. As shown in FIG. 10, the communication apparatus 1000 may include:
a communication module 1010, configured to receive system information, where the system information includes configuration information for measuring a reference signal of a carrier for another terminal device; and
a processing module 1020, configured to measure the reference signal based on the system information.

FIG. 11 is a schematic diagram of a structure of a communication apparatus 1200 according to an embodiment of this application. For example, the communication apparatus may be the terminal device in the foregoing embodiments. As shown in FIG. 11, the communication apparatus 1200 includes a processor 1210 and a transceiver 1220. Optionally, the communication apparatus 1200 further includes a memory 1230. The processor 1210, the transceiver 1220, and the memory 1230 may communicate with each other through an internal connection path, to transfer a control signal and/or a data signal. The memory 1230 is configured to store a computer program. The processor 1210 is configured to: invoke the computer program from the memory 1230 and run the computer program, to control the transceiver 1220 to receive and send a signal.

The processor 1210 and the memory 1230 may be integrated into one processing apparatus. The processor 1210 is configured to execute program code stored in the memory 1230 to implement functions of the terminal device in the foregoing method embodiments. In specific implementation, the memory 1230 may also be integrated into the processor 1210, or may be independent of the processor 1210. The transceiver 1220 may be implemented by using a transceiver circuit.

The foregoing communication apparatus may further include an antenna 1240, configured to send, by using a radio signal, uplink data or uplink control signaling output by the transceiver 1220, or receive downlink data or downlink control signaling and send the received downlink data or downlink control signaling to the transceiver 1220 for further processing.

It should be understood that the apparatus 1200 may correspond to the terminal device in the method 200, the method 400, and the method 500 according to embodiments of this application, and the apparatus 1200 may alternatively be a chip or a component used in the terminal device. In addition, components in the apparatus 1200 implement corresponding procedures in the method 200, the method 400, and the method 500. Specifically, the memory 1230 is configured to store program code, so that when executing the program code, the processor 1210 controls the transceiver 1220 to perform the process of S230 in the method 200, and the processor 1210 is configured to perform the process of S240 in the method 200. Alternatively, the transceiver 1220 is controlled to perform the process of S430 in the method 400, and the processor 1210 is configured to perform the process of S440 in the method 400. Alternatively, the transceiver 1220 is controlled to perform the process of S510 in the method 500, and the processor 1210 is configured to perform the process of S520 in the method 500. Specific processes of performing the foregoing corresponding steps by each component are described in detail in the method 200, the method 400, and the method 500. For brevity, details are not described herein again.

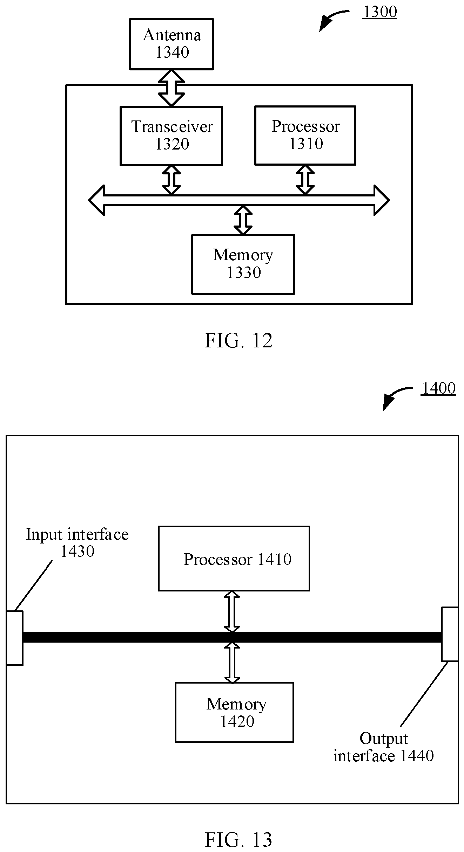

FIG. 12 is a schematic diagram of a structure of a communication apparatus 1300 according to an embodiment of this application. For example, the communication apparatus may be the network device in the foregoing embodiments. As shown in FIG. 12, the communication apparatus 1300 (for example, a base station) includes a processor 1310 and a transceiver 1320. Optionally, the communication apparatus 1300 further includes a memory 1330. The processor 1310, the transceiver 1320, and the memory 1330 communicate with each other through an internal connection channel to transmit a control signal and/or a data signal. The memory 1330 is configured to store a computer program. The processor 1310 is configured to invoke the computer program from the memory 1330 and run the computer program, to control the transceiver 1320 to receive and send a signal.

The processor 1310 and the memory 1330 may be integrated into one processing apparatus. The processor 1310 is configured to execute program code stored in the memory 1330 to implement functions of the network device in the foregoing method embodiments. In specific implementation, the memory 1330 may alternatively be integrated into the processor 1310, or may be independent of the processor 1310. The transceiver 1320 may be implemented by using a transceiver circuit.

The foregoing communication apparatus 1300 may further include an antenna 1340, configured to send, by using a radio signal, downlink data or downlink control signaling output by the transceiver 1320, or receive uplink data or uplink control signaling and send the received uplink data or uplink control signaling to the transceiver 1320 for further processing.

It should be understood that the apparatus 1300 may correspond to the network device in the method 200 or 400 according to embodiments of this application, and the apparatus 1300 may alternatively be a chip or a component used in the network device. In addition, components in the apparatus 1300 implement corresponding procedures in the method 200 in FIG. 2 or the method 400 in FIG. 4. Specifically, the processor 1310 is configured to perform the process of S210 in the method 200, and the transceiver 1320 is configured to perform the process of S220 in the method 200; or the processor 1310 is configured to perform the process of S410 in the method 400, and the transceiver 1320 is configured to perform the process of S420 in the method 400. Specific processes of performing the foregoing corresponding steps by each component are described in detail in the method 200 and the method 400. For brevity, details are not described herein again.

FIG. 13 is a schematic diagram of a structure of a chip according to an embodiment of this application. The chip 1400 shown in FIG. 13 includes a processor 1410. The processor 1410 may invoke a computer program from a memory and run the computer program, to implement the method in embodiments of this application.

Optionally, as shown in FIG. 13, the chip 1400 may further include a memory 1420. The processor 1410 may invoke a computer program from the memory 1420 and run the computer program, to perform the steps of the method 200 or the method 700 in embodiments of this application.

The memory 1420 may be an independent component independent of the processor 1410, or may be integrated into the processor 1410.

Optionally, the chip 1400 may further include an input interface 1430. The processor 1410 may control the input interface 1430 to communicate with another device or chip, and specifically, may obtain information or data sent by the another device or chip.

Optionally, the chip 1400 may further include an output interface 1440. The processor 1410 may control the output interface 1440 to communicate with another device or chip, and specifically, may output information or data to the another device or chip.

Optionally, the chip may be used in the terminal device or the network device in embodiments of this application, and the chip can implement corresponding procedures implemented by the terminal device or the network device in the methods in embodiments of this application. For brevity, details are not described herein again.

It should be understood that the chip mentioned in embodiments of this application may also be referred to as a system-level chip, a system chip, a chip system, a system-on-chip chip, or the like.

An embodiment of this application further provides a computer-readable storage medium, configured to store a computer program.

Optionally, the computer-readable storage medium may be used in the terminal device or the network device in embodiments of this application, and the computer program enables a computer to perform corresponding procedures implemented by the terminal device or the network device in the methods in embodiments of this application. For brevity, details are not described herein again.

An embodiment of this application further provides a computer program product, including computer program instructions.

Optionally, the computer program product may be used in the terminal device or the network device in embodiments of this application, and the computer program instructions enable a computer to perform corresponding procedures implemented by the terminal device or the network device in the methods in embodiments of this application. For brevity, details are not described herein again.

An embodiment of this application further provides a computer program.

Optionally, the computer program may be used in the terminal device or the network device in embodiments of this application. When the computer program runs on a computer, the computer is enabled to perform corresponding procedures implemented by the terminal device or the network device in the methods in embodiments of this application. For brevity, details are not described herein again.

An embodiment of this application further provides a communication system, including the terminal device and the network device in the foregoing embodiments, to implement mutual cooperation between devices.

A person of ordinary skill in the art may be aware that modules and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. The module division is merely logical function division and may be other division during actual implementation. For example, a plurality of modules or components may be combined. In addition, the displayed or discussed mutual couplings or communication connections may be indirect couplings or communication connections through some interfaces, apparatuses, or modules.

In addition, functional modules in embodiments of this application may be integrated into one physical entity, or each module may independently correspond to one physical entity, or two or more modules may be integrated into one physical entity.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining an uplink carrier, comprising:
receiving a first parameter of at least one first uplink carrier from a network device, wherein the first parameter is associated with at least one of the following of the at least one first uplink carrier: load and a subcarrier spacing SCS; and
determining a second uplink carrier from the at least one first uplink carrier based on the first parameter of the at least one first uplink carrier, wherein the second uplink carrier is an uplink carrier for access.

2. The method according to claim 1, wherein the second uplink carrier is an uplink carrier with a largest first parameter in the at least one first uplink carrier; or
the second uplink carrier is an uplink carrier with a smallest first parameter in the at least one first uplink carrier.

3. The method according to claim 1, wherein the method further comprises:
determining a first value, wherein
the second uplink carrier is an uplink carrier with a largest sequence number in at least one third uplink carrier; or
the second uplink carrier is an uplink carrier with a smallest sequence number in at least one third uplink carrier, wherein
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

4. The method according to claim 1, wherein the method further comprises:
determining a first value, wherein
the second uplink carrier is an uplink carrier with a highest signal strength in at least one third uplink carrier; or
the second uplink carrier is an uplink carrier, in at least one third uplink carrier, with a highest signal strength of a downlink carrier associated with the at least one third uplink carrier, wherein
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

5. The method according to claim 3 or 4, wherein the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

6. The method according to claim 5, wherein the third threshold is configured by the network device by using radio resource control RRC signaling; or
the third threshold is predefined.

7. The method according to any one of claims 1 to 6, wherein the at least one first uplink carrier is an uplink carrier whose signal strength is greater than or equal to a first threshold in at least one uplink carrier configured by the network device; or
the at least one first uplink carrier is an uplink carrier, in at least one uplink carrier configured by the network device, with a signal strength of a downlink carrier associated with the at least one uplink carrier being greater than or equal to a second threshold.

8. The method according to any one of claims 1 to 7, wherein a larger value of at least one of the following items indicates a smaller first parameter: the load and the SCS; or
a larger value of at least one of the following items indicates a larger first parameter: the load and the SCS.

9. The method according to any one of claims 1 to 8, wherein a quantity of the at least one first uplink carrier is a positive integer greater than 1.

10. An uplink carrier access method, comprising:
determining, by a network device, a first parameter, wherein the first parameter is associated with at least one of the following items of at least one first uplink carrier: load and a subcarrier spacing SCS; and
sending, by the network device, the first parameter to a terminal device.

11. The method according to claim 10, wherein a larger value of at least one of the following items indicates a smaller first parameter: the load and the SCS; or
a larger value of at least one of the following items indicates a larger first parameter: the load and the SCS.

12. The method according to claim 10 or 11, wherein a quantity of the at least one first uplink carrier is a positive integer greater than 1.

13. An uplink carrier access method, comprising:
receiving, by a terminal device, first information, wherein the first information comprises correspondence information between at least one first uplink carrier and at least one second downlink carrier; and
determining, by the terminal device, a second uplink carrier from the at least one first uplink carrier based on the first information, wherein the second uplink carrier is an uplink carrier for access in a first cell, wherein
the at least one first uplink carrier and a second downlink carrier are located in a second cell, and the at least one first uplink carrier is located in the first cell; or
the at least one first uplink carrier and a first downlink carrier are located in the first cell.

14. The method according to claim 13, wherein the method further comprises:
determining, by the terminal device, a signal strength of the at least one second downlink carrier, wherein
the second uplink carrier is an uplink carrier corresponding to a downlink carrier with a highest signal strength in the at least one second downlink carrier.

15. The method according to claim 13, wherein the method further comprises:
receiving, by the terminal device, a first parameter of the at least one first uplink carrier, wherein the first parameter is associated with at least one of the following items of the at least one first uplink carrier: load and a subcarrier spacing SCS; and
determining a first value, wherein
the second uplink carrier is an uplink carrier with a largest sequence number in at least one third uplink carrier; or
the second uplink carrier is an uplink carrier with a smallest sequence number in at least one third uplink carrier, wherein
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

16. The method according to claim 13, wherein the method further comprises:
receiving, by the terminal device, a first parameter of the at least one first uplink carrier, wherein the first parameter is associated with at least one of the following items of the at least one first uplink carrier: load and a subcarrier spacing SCS; and
determining a first value, wherein
the second uplink carrier is an uplink carrier, in at least one third uplink carrier, with a highest signal strength of the at least one second downlink carrier associated with the at least one third uplink carrier, wherein
the at least one third uplink carrier is an uplink carrier whose first parameter is greater than the first value in the at least one first uplink carrier; or
the at least one third uplink carrier is an uplink carrier whose first parameter is less than the first value in the at least one first uplink carrier.

17. The method according to claim 16, wherein the first value is greater than or equal to 0 and less than or equal to a third threshold, and the third threshold is associated with at least one of the following: a quality of service QoS level, a buffer status report BSR level, a type of a terminal device, a latency requirement, and a service type of the terminal device.

18. The method according to claim 17, wherein the third threshold is configured by a network device by using radio resource control RRC signaling; or
the third threshold is predefined.

19. The method according to any one of claims 15 to 18, wherein a larger value of at least one of the following items indicates a smaller first parameter: the load and the SCS; or
a larger value of at least one of the following items indicates a larger first parameter: the load and the SCS.

20. The method according to any one of claims 13 to 19, wherein a quantity of the at least one first uplink carrier is a positive integer greater than 1.

21. An uplink carrier access method, comprising:
determining, by a network device, first information, wherein the first information comprises correspondence information between at least one first uplink carrier and at least one second downlink carrier; and
sending, by the network device, the first information to a terminal device.

22. The method according to claim 21, wherein the method further comprises:
sending, by the network device, a first parameter of at least one first uplink carrier to the terminal device, wherein the first parameter is associated with at least one of the following items of the at least one first uplink carrier: load and a subcarrier spacing SCS.

23. The method according to claim 22, wherein a larger value of at least one of the following items indicates a smaller first parameter: the load and the SCS; or
a larger value of at least one of the following items indicates a larger first parameter: the load and the SCS.

24. The method according to any one of claims 21 to 23, wherein a quantity of the at least one first uplink carrier is a positive integer greater than 1.

25. A measurement method, wherein the method comprises:
receiving, by a terminal device, system information, wherein the system information comprises configuration information for measuring a reference signal of a carrier for another terminal device; and
measuring, by the terminal device, the reference signal based on the system information.

26. A communication apparatus, comprising a processor and a communication interface, wherein the communication interface is configured to receive a signal from another communication apparatus other than the communication apparatus and transmit the signal to the processor, or send a signal from the processor to another communication apparatus other than the communication apparatus, and the processor is configured to implement, by using a logic circuit or executing a code instruction, the method according to any one of claims 1 to 9, 13 to 20, 25, 10 to 12, or 21 to 24.

27. A computer-readable storage medium, wherein the computer-readable storage medium stores a computer program, and when the computer program is run, the method according to any one of claims 1 to 9, 13 to 20, 25, 10 to 12, or 21 to 24 is implemented.
